# EUROPEAN PATENT APPLICATION

(11) **EP 2 738 750 A1**
(43) Date of publication of application: **04.06.2014**
(21) Application number: 12819419.8
(22) Date of filing: 26.07.2012
(51) Int. Cl.: G08G 1/01, G06Q 50/30, G08G 1/00

(54) **TRAFFIC CONTROL SYSTEM, CONGESTION CONTROL METHOD, INFORMATION PROCESSING APPARATUS, AND CONTROL METHOD AND STORAGE MEDIUM THEREFOR**

(30) Priority: 29.07.2011 JP 2011167690
(71) Applicant: NEC Corporation, Tokyo 108-8001 (JP)
(72) Inventor: ITAYA Satoko, Tokyo 108-8001 (JP); DOI Shinichi, Tokyo 108-8001 (JP); TANAKA Rie, Tokyo 108-8001 (JP); KONISHI Taku, Tokyo 108-8001 (JP); DAVIS Peter, Kyoto-shi Kyoto 606-8314 (JP)
(74) Representative: Robson, Aidan John
(86) International application number: PCT/JP2012/068997
(87) International publication number: WO 2013/018656

(57) **Abstract**

A traffic control system (100) is provided with: a road information database (101) that accumulates road information including congestion degree; a reservation fee setter (102) that refers to the accumulated road information and sets a road passage reservation fee for a user; a reservation collector (103) that collects a road passage reservation from a user for the road passage reservation fee being set; and a congestion degree predictor (104) that predicts congestion degree of a road, including a user who passes without making a road passage reservation, by using information of the collected road passage reservation. The predicted congestion degree is used for alleviating congestion of a road.

## Description

### Technical Field

The present invention relates to a technique of controlling congestion of road traffic.

### Background Art

In the above technical field, Patent Literature 1 discloses a technique of providing a lower reservation fee as the number of reservations is smaller when making a reservation for using a toll road.

### Citation List

### Patent Literature

Patent Literature 1: Unexamined Japanese Patent Application Kokai Publication No. 2002-024982.

### Summary of Invention

### Technical Problem

However, although the technique described in the above document provides an incentive for reserving road passage, information used for alleviating congestion of a road cannot be obtained based on road passage reservation information.

The objective of the present invention is to provide a technique to solve the above problem.

### Solution to Problem

To achieve the above objective, a traffic control system according to the present invention is a traffic control system for alleviating congestion of a road, that comprises: a road information database that accumulates road information including congestion degree; reservation fee setting means that refers to the road information accumulated in the road information database and sets a road passage reservation fee for a user; reservation collecting means that collects a road passage reservation from a user for the road passage reservation fee being set; and congestion degree predicting means that predicts congestion degree of a road, including a user who passes without making a road passage reservation, by using information of the road passage reservation collected by the reservation collecting means, wherein predicted congestion degree predicted by the congestion degree predicting means is used for alleviating congestion of a road.

To achieve the above objective, a congestion control method according to the present invention is a congestion control method for alleviating congestion of a road, that includes: a reservation fee setting step that refers to road information accumulated in a road information database, that accumulates the road information including congestion degree, and sets a road passage reservation fee for a user; a reservation collecting step that collects a road passage reservation from a user for the road passage reservation fee being set; and a congestion degree predicting step that predicts congestion degree of a road, including a user who passes without making a road passage reservation, by using the road passage reservation collected at the reservation collecting step, wherein predicted congestion degree predicted at the congestion degree predicting step is used for alleviating congestion of a road.

To achieve the above objective, an information processing apparatus according to the present invention is an information processing apparatus in a traffic control system for alleviating congestion of a road, that comprises: a road information database that accumulates road information including congestion degree; reservation fee setting means that refers to the road information accumulated in the road information database and sets a road passage reservation fee for a user; reservation collecting means that collects a road passage reservation input by a user via a user terminal for the road passage reservation fee being set; congestion degree predicting means that predicts congestion degree of a road, including a user who passes without making a road passage reservation, by using the road passage reservation collected by the reservation collecting means; and output means that outputs information of predicted congestion degree predicted by the congestion degree predicting means.

To achieve the above objective, a control method of an information processing apparatus according to the present invention is a control method of an information processing apparatus in a traffic control system for alleviating congestion of a road, that includes: a reservation fee setting step that refers to road information accumulated in a road information database, that accumulates the road information including congestion degree, and sets a road passage reservation fee for a user; a reservation collecting step that collects a road passage reservation input by a user via a user terminal for the road passage reservation fee being set; a congestion degree predicting step that predicts congestion degree of a road, including a user who passes without making a road passage reservation, by using the road passage reservation collected at the reservation collecting step; and an output step that outputs information of predicted congestion degree predicted at the congestion degree predicting step.

To achieve the above objective, a storage medium according to the present invention is a computer-readable storage medium storing a control program of an information processing apparatus in a traffic control system for alleviating congestion of a road, that stores the control program causing a computer to function as: reservation fee setting means that refers to road information accumulated in a road information database, that accumulates the road information including congestion degree, and sets a road passage reservation fee for a user; reservation collecting means that collects a road passage reservation input by a user via a user terminal for the road passage reservation fee being set; congestion degree predicting means that predicts congestion degree of a road, including a user who passes without making a road passage reservation, by using the road passage reservation collected by the reservation collecting means; and output means that outputs information of predicted congestion degree predicted by the congestion degree predicting means.

### Advantageous Effects of Invention

According to the present invention, information used for alleviating congestion of a road can be obtained based on road passage reservation information.

### Brief Description of Drawings

FIG. 1 is a block diagram of a traffic control system according to a first embodiment;
FIG. 2 is a block diagram of a traffic control system according to a second embodiment;
FIG. 3 is a diagram showing a road passage reservation screen according to the second embodiment;
FIG. 4 is an explanatory diagram of a database (DB) for setting reservation fees, in an information processing apparatus, according to the second embodiment;
FIG. 5 is a diagram showing a fee table by road according to the second embodiment;
FIG. 6 is a diagram showing a fee table by time range according to the second embodiment;
FIG. 7 is a diagram showing a reservation fee table according to the second embodiment;
FIG. 8A is a diagram showing a congestion degree adjusting fee table according to the second embodiment;
FIG. 8B is a diagram showing a variant of the congestion degree adjusting fee table according to the second embodiment;
FIG. 9 is a diagram showing a calculation example of a payment according to the second embodiment;
FIG. 10 is an explanatory diagram of a DB for predicting congestion degree, in the information processing apparatus, according to the second embodiment;
FIG. 11A is a diagram showing a reservation/congestion degree association table according to the second embodiment;
FIG. 11B is an explanatory diagram of relativity between reservation and congestion degree according to the second embodiment;
FIG. 12 is a diagram showing a congestion degree prediction adjustment table according to the second embodiment;
FIG. 13 is a diagram showing a prediction example of a congestion degree predictor according to the second embodiment;
FIG. 14 is a diagram showing a first variant of the prediction example of the congestion degree predictor according to the second embodiment;
FIG. 15 is a diagram showing a second variant of the prediction example of the congestion degree predictor according to the second embodiment;
FIG. 16 is a hardware configuration diagram of the information processing apparatus according to the second embodiment;
FIG. 17A is a flowchart of control processing of the information processing apparatus according to the second embodiment;
FIG. 17B is a flowchart of reservation fee presentation processing according to the second embodiment;
FIG. 18 is a block diagram of an information processing apparatus according to a third embodiment;
FIG. 19A is a diagram showing a limit number of reservations table according to the third embodiment;
FIG. 19B is a flowchart of control processing of the information processing apparatus according to the third embodiment;
FIG. 20 is a block diagram of a traffic control system according to a fourth embodiment;
FIG. 21 is a diagram showing a traffic lane control example of the traffic control system according to the fourth embodiment;
FIG. 22 is a diagram showing a variant of the traffic lane control example of the traffic control system according to the fourth embodiment;
FIG. 23A is a diagram showing a table for congestion alleviation according to the fourth embodiment;
FIG. 23B is a flowchart of congestion alleviation processing according to the fourth embodiment;
FIG. 24 is a diagram showing a table for congestion alleviation according to a fifth embodiment;
FIG. 25 is a flowchart of congestion alleviation processing according to the fifth embodiment;
FIG. 26 is a diagram showing a table for congestion alleviation according to a sixth embodiment;
FIG. 27 is a flowchart of congestion alleviation processing according to the sixth embodiment;
FIG. 28 is a diagram showing a table for congestion alleviation according to a seventh embodiment;
FIG. 29 is a flowchart of congestion alleviation processing according to the seventh embodiment;
FIG. 30 is a block diagram of a traffic control system according to an eighth embodiment;
FIG. 31A is a diagram showing a display screen of a user terminal according to the eighth embodiment; and
FIG. 31B is a flowchart of control processing of an information processing apparatus according to the eighth embodiment.

### Description of Embodiments

The following will exemplarily and specifically describe embodiments of the present invention with reference to the drawings. However, components described in the following embodiments are only examples without limiting the technical scope of the present invention thereto.

### (First Embodiment)

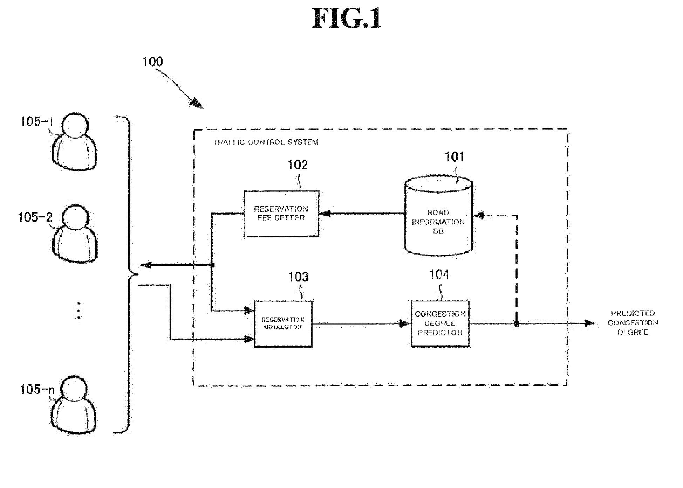

A traffic control system 100, as a first embodiment of the present invention, will be described with reference to FIG. 1. The traffic control system 100 is a system for alleviating congestion of a road.

As shown in FIG. 1, the traffic control system 100 includes a road information database (hereinafter, "DB") 101, a reservation fee setter 102, a reservation collector 103, and a congestion degree predictor 104. The road information DB 101 accumulates road information that includes congestion degree. The reservation fee setter 102 refers to the road information accumulated in the road information DB 101, and sets a road passage reservation fee for users. The reservation collector 103 collects road passage reservations from user 105-1 to 105-n for the road passage reservation fees being set. The congestion degree predictor 104 predicts congestion degree of a road, including a user who passes without making a road passage reservation, using the road passage reservation information collected by the reservation collector 103. Then, predicted congestion degree predicted by the congestion degree predictor 104 is used for alleviating congestion of a road.

According to the first embodiment, information used for alleviating congestion of a road can be obtained from the road passage reservation information.

### (Second Embodiment)

Next, a traffic control system according to a second embodiment of the present invention will be described. In this embodiment, the traffic control system sets a road passage reservation fee from predicted congestion degree, collects a road passage reservation through a network, and further predicts congestion degree based on the number of reservations. Moreover, the traffic control system actually measures actual congestion degree, and adjusts prediction of the congestion degree based on the actually measured congestion degree.

According to this embodiment, since predicted congestion degree is calculated as information to be used for alleviating congestion of a road, based on the road passage reservation information, congestion control according to lines and sections becomes possible.

### (Configuration of the traffic control system)

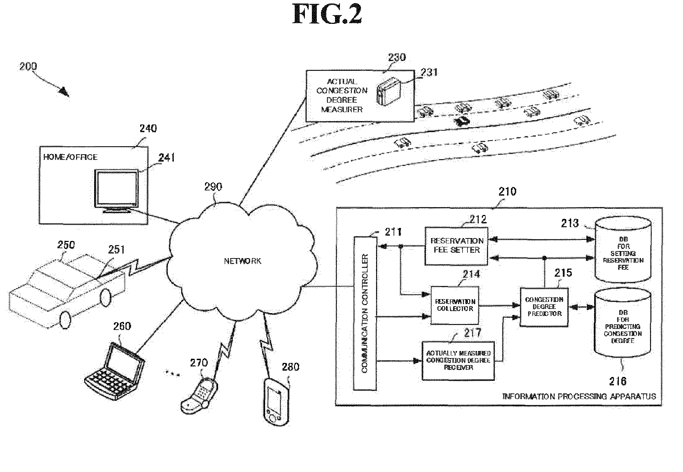

FIG. 2 is a block diagram of the traffic control system 200 according to this embodiment.

The traffic control system 200 of FIG. 2 comprises: an information processing apparatus 210 that processes a road passage reservation; an actual congestion degree measurer 230 that actually measures actual congestion degree of a road; and user terminal 240 to 280 that make reservations, all of which are connected via a network 290. The information processing apparatus 210 includes: a communication controller 211; a reservation fee setter 212; a database (hereinafter, "DB") for setting reservation fee 213; a reservation collector 214; a congestion degree predictor 215; and a DB for predicting congestion degree 216. In addition, the information processing apparatus 210 includes an actually measured congestion degree receiver 217.

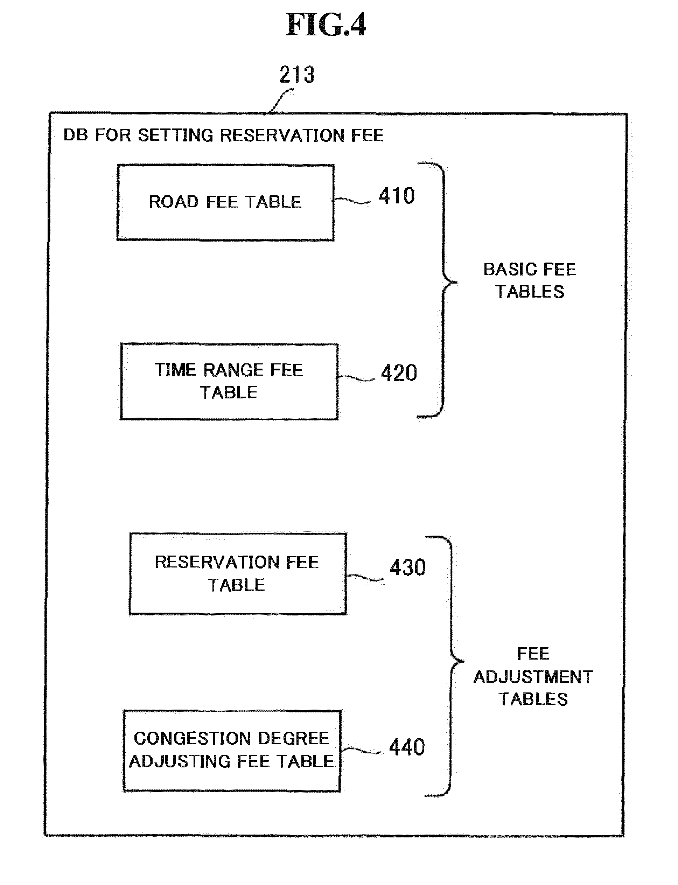

The reservation fee setter 212 sets a reservation fee by referring to the DB for setting reservation fee 213, and presents the reservation fee to a user via the communication controller 211. In addition, the reservation fee setter 212 adjusts the reservation fee based on predicted congestion degree predicted by the congestion degree predictor 215. Moreover, the predicted congestion degree is accumulated in the DB for setting reservation fee 213. The DB for setting reservation fee 213 stores tables that are used for setting a reservation fee according to lines and time ranges (refer to FIGS. 4 to 8B).

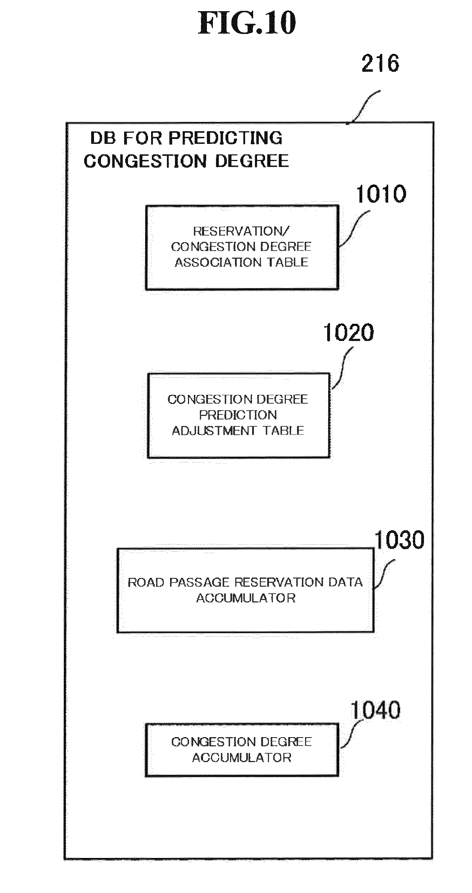

The reservation collector 214 receives a road passage reservation from a user for the reservation fee via the communication controller 211, and collects the reservation by line, date, and time range. Based on the number of reservations collected by the reservation collector 214, the congestion degree predictor 215 refers to the DB for predicting congestion degree 216 and predicts congestion degree of each line in each time range. Alternatively, the congestion degree predictor 215 may predict congestion degree of each section of each line, instead of congestion degree of each line in each time range. Also, the congestion degree predictor 215 adjusts prediction of the congestion degree according to actually measured congestion degree received by the actually measured congestion degree receiver 217. The DB for predicting congestion degree 216 stores tables for predicting congestion degree that are used for predicting congestion degree, based on the number of reservations from the reservation collector 214 or the actually measured congestion degree (refer to FIGS. 10 to 15). The actually measured congestion degree receiver 217 receives, through the communication controller 211, the actually measured congestion degree that is transmitted from the actual congestion degree measurer 230 via the network 290.

The actual congestion degree measurer 230 monitors, for example, passage of vehicles on a road by a video camera 231, and transmits a flow rate of vehicles (for example, the number of vehicles per 5 min) as congestion degree to the information processing apparatus 210. Alternatively, the actual congestion degree measurer 230 may transmit a video image and the information processing apparatus 210 may calculate actually measured congestion degree.

As for the user terminal 240 to 280, 240 indicates home or an office, and a user makes a road passage reservation using a personal computer (hereinafter, "PC") 241. 250 is an automobile, and a user makes a road passage reservation using a car navigation system (hereinafter, "car navigation") 251 mounted on the automobile 250. 260 is a notebook personal computer, and a user makes a road passage reservation using the notebook personal computer 260 that the user carries around. 270 is a portable telephone, and a user makes a road passage reservation using the portable telephone 270. 280 is a portable terminal such as a smartphone, and a user makes a road passage reservation using the portable terminal 280. It is noted that the user terminals are not limited to the above; any terminal that is connected to the network 290 and capable of communicating with the information processing apparatus 210 can be used to make a road passage reservation.

### (Road passage reservation screen)

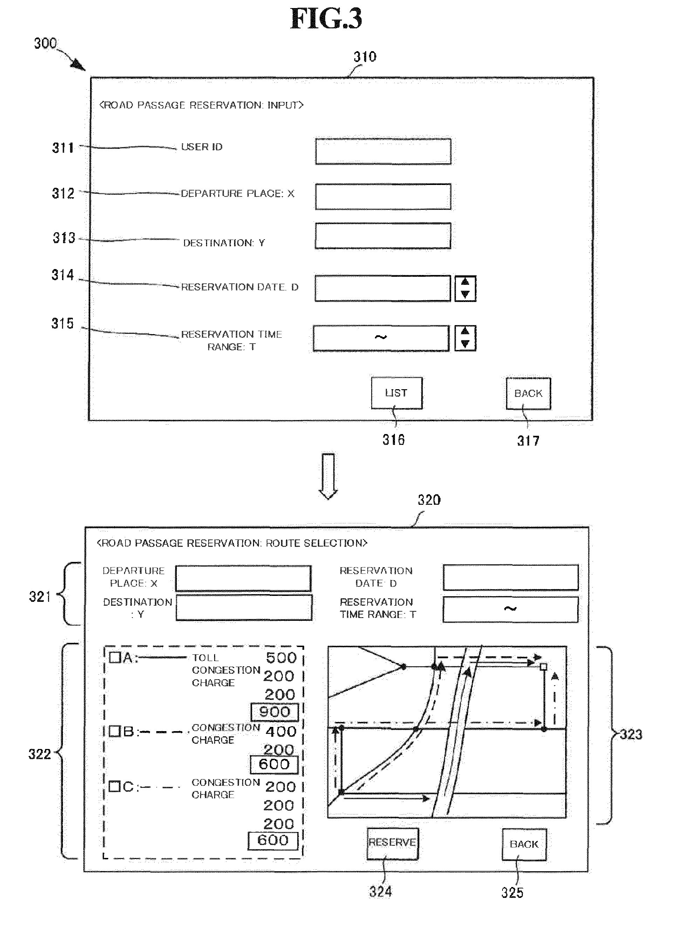

FIG. 3 is a diagram showing a road passage reservation screen 300 according to this embodiment. While FIG. 3 shows a screen that provides both route search and reservation functions, the screen is not limited to such a screen. The road passage reservation screen 300 may be a screen that provides input fields of a section of a freeway and a road number/name. Further, the road passage reservation screen 300 may be a screen that provides a search map in which a road, a section, and a route are input.

In the road passage reservation screen 300 of FIG. 3, a screen 310 of the upper diagram is an input screen where a user makes a road passage reservation. In the input screen 310, a user ID input area 311 is an area for inputting a user ID of a user who is making a reservation. Alternatively, the user ID may be replaced with a user name or the like. A departure place input area 312 is an area for inputting a departure place X. A destination input area 313 is an area for inputting a destination Y. A reservation date input area 314 is an area for inputting a date to be reserved. A reservation time range input area 315 is an area for inputting a time range of passing a road. A LIST button 316 is a button for searching routes from a departure place X to a destination Y based on input information, and directing to present the routes and fees (including a toll fee and a congestion charge). A BACK button 317 is a button for changing input items for reservation or returning to a previous screen.

A screen 320 of the lower diagram in FIG. 3 is a screen that shows searched results of routes and reservation fees for using respective routes, so as to prompt a user to make a reservation. A search condition display area 321 is an area for displaying a search condition input in the input screen 310. A search result display area 322 is an area for indicating searched routes and details of reservation fees of respective routes. In FIG. 3, three routes A, B, C are found, and reservation fees for respective routes are displayed. A map image 323 is an image of a map indicating respective routes. Styles of arrows on the map (solid line/dashed line/alternate long and short dashed line) correspond to lines in the reservation fee area. A RESERVE button 324 is a button for reserving a route after selecting a checkbox of the route in the reservation fee area. A BACK button 325 is a button for redoing selection of a checkbox or returning to re-enter reservation input information.

### (DB for setting reservation fee)

FIG. 4 is an explanatory diagram of a DB for setting reservation fee 213, in the information processing apparatus, according to this embodiment.

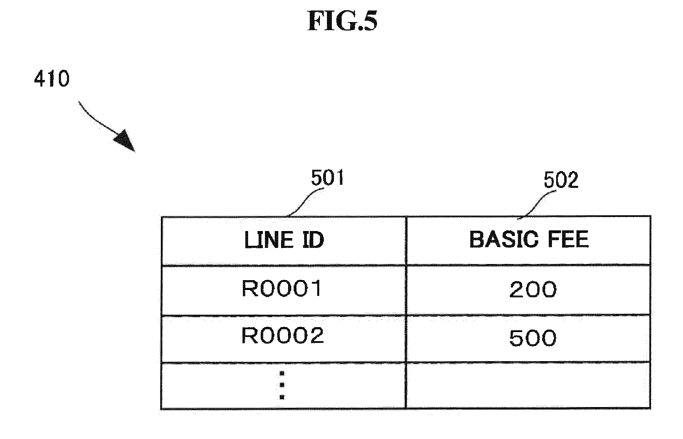

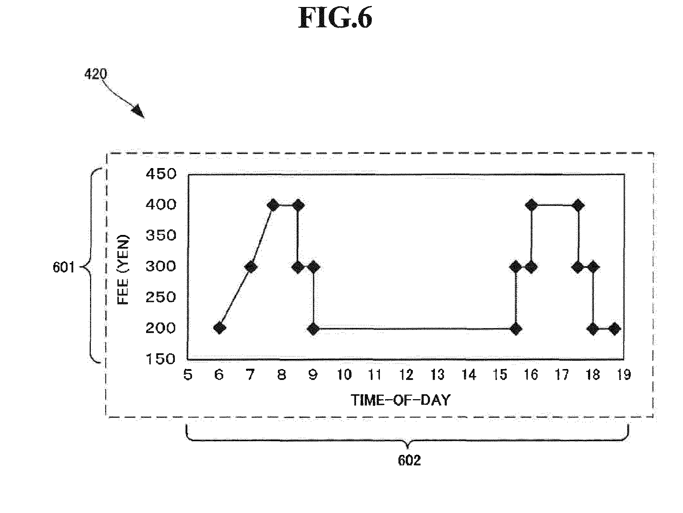

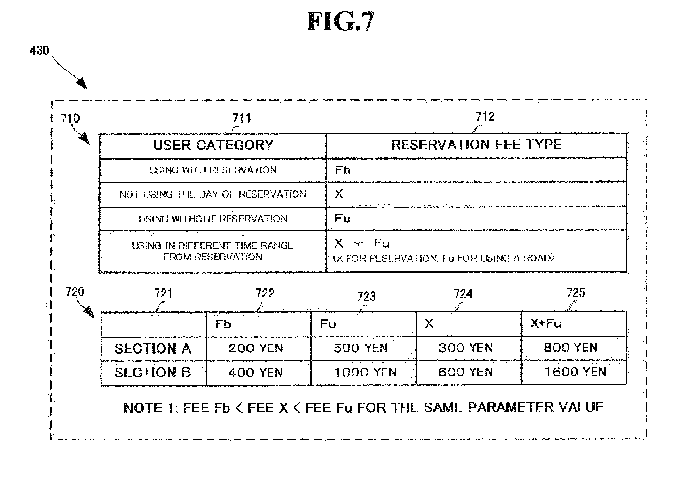

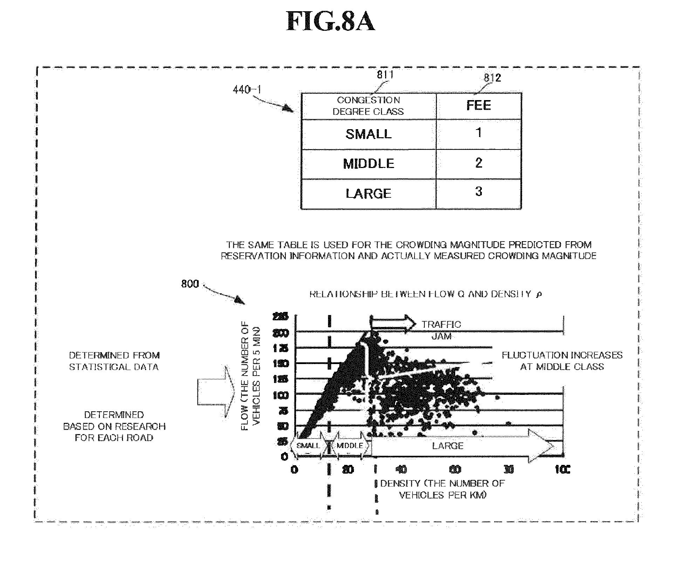

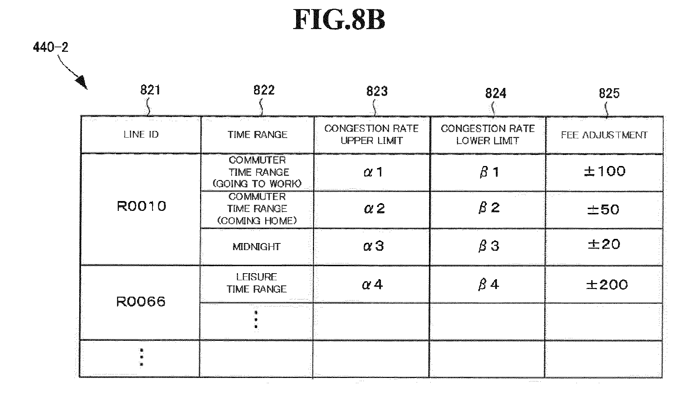

The DB for setting reservation fee 213 includes: basic fee tables of reservation fees for respective roads and time ranges; and fees adjustment tables for reservation conditions, congestion degree, and the like. The basic fee tables include a road fee table 410 (refer to FIG. 5) that stores basic fees for respective roads and a time range fee table 420 (refer to FIG. 6) that stores basic fees according to time ranges of each road. Further, the fee adjustment tables includes a reservation fee table 430 (refer to FIG. 7) for setting reservation fees according to reservation condition, reservation compliance state, and the like, and a congestion degree adjusting fee table 440 (refer to FIGS. 8A or 8B) for adjusting reservation fees according to predicted congestion degree and actually measured congestion degree. The following will illustrate more specific configuration of each table.

### (Road fee table)

FIG. 5 is a diagram showing the road fee table 410 according to this embodiment. It is noted that the road fee table 410 is not necessarily provided. However, the DB for setting reservation fee 213 can avoid redundantly storing reservation fees by time range for all roads, by defining basic fees for respective roads, and adding/subtracting fees according to congestion degree of a time range.

The road fee table 410 of FIG. 5 stores line IDs 501 and basic fees 502 in association with each other. Reservation fees are set by adjusting fees according to conditions such as time ranges and congestion degree, based on the basic fees. Alternatively, the road fee table 410 may set different basic fees by section ID.

### (Time range fee table)

FIG. 6 is a diagram showing the time range fee table 420 according to this embodiment. The time range fee table 420 may be determined by actually measuring congestion and traffic jam for each road, or the same table may be applied to a plurality of roads for commuter roads in cities and the like where similar time range trends are observed. Further, as the time range fee table 420, a time-shifted table can be used for a road where commuter time is shifted.

The time range fee table 420 of FIG. 6 stores fees of a vertical axis 601 corresponding to time-of-day of a horizontal axis 602. Here, when a line ID is R0001, for example, on the basis of a basic fee 200 yen for R0001 shown in the road fee table 410 of FIG. 5, the time range fee table 420 stores fees of 1.5 times as much for 7:00, 8:30 to 9:00, and the like, and twice as much for 7:30 to 8:30, 16:00 to 17:30, and the like.

### (Reservation fee table)

FIG. 7 is a diagram showing the reservation fee table 430 according to this embodiment. FIG. 7 shows reservation fee types for respective user categories and reservation fees for respective sections. Alternatively, basic fees for respective sections may be set from the road fee table 410 of FIG. 5.
The reservation fee table 430 of FIG. 7 includes a type table 710 that stores reservation fee types according to the reservation usage states of users, and a fee table 720 that stores reservation fees corresponding to reservation fee types for respective sections. The type table 710 stores reservation fee types 712 in association with user categories 711. Moreover, the fee table 720 stores reservation fees corresponding to respective reservation fee types 712 in association with sections 721.

It is noted that the user categories 711 are an example, and different categorization and finer categorization are possible. Further, reservation fees in the fee table 720 are set to become fee Fb < fee X < fee Fu. Without changing this magnitude relation, fee differences, scale factors, and the like, can be changed in accordance with a target of increase in the number of reservations and a target of reservation compliance. Naturally, a fee structure can be made to prevent a user without reservation from being charged less than a user with reservation.

### (Congestion degree adjusting fee table)

FIG. 8A is a diagram showing a congestion degree adjusting fee table 440-1 according to this embodiment.

The congestion degree adjusting fee table 440-1 of FIG. 8A is a table to classify predicted congestion degree (crowding magnitude) into three classes of Large, Middle, Small, and further adjust the reservation fee in the reservation fee table 430 of FIG. 7 according to predicted congestion degree. The congestion degree adjusting fee table 440-1 of FIG. 8A stores scale factors M 812 for simply changing magnification of reservation fees, in association with classes 811 of predicted congestion degree.
It is noted that the classification of predicted congestion degree is determined on the basis of a flow to density graph. As an example, FIG. 8A is observed according to "Science of traffic jam--What is Jamology? (in Japanese)": a presentation on January 31, 2009 at The Institute of Statistical Mathematics, by Katsuhiro Nishinari, Japan Science and Technology Agency PRESTO, Graduate School of Engineering, The University of Tokyo (http://www.silvertwilight.gr.jp/bsj/Past_Activity_files/NIshinari-20090131.pdf).

800 of FIG. 8A is a graph in the above presentation, that shows relationship between density ρ (the number of vehicles per km) and flow Q (the number of vehicles per 5 min) in a freeway. In this embodiment, this relationship is applied to predicted congestion degree ("crowding magnitude" in FIG.BA) predicted from reservation information. A region where a relationship between density ρ and flow Q is constant with little fluctuation is defined as congestion degree Small class; a region where fluctuation gradually increases is defined as congestion degree Middle class; and a region where fluctuation is spread throughout the graph is defined as congestion degree Large class. Such a classification of congestion degree is determined based on statistical data obtained by researching respective roads or sections. It is noted that traffic jams hardly occur in the congestion degree Small class; traffic jams intermittently occur in the congestion degree Middle class; and traffic jams continue in the congestion degree Large class.

FIG. 8B is a diagram showing a variant 440-2 of the congestion degree adjusting fee table according to this embodiment.

In the congestion degree adjusting fee table 440-2 of FIG. 8B, in time ranges where a congestion rate of a road becomes high and where a congestion rate of a road becomes low, when a predicted congestion rate exceeds an upper limit, a reservation fee is additionally charged, while, when a predicted congestion rate falls below a lower limit, a reservation fee is discounted.

The congestion degree adjusting fee table 440-2 of FIG. 8B stores congestion rate upper limits 823 and congestion rate lower limits 824 as thresholds in association with line IDs 821 and time ranges 822. Further, fee adjustments 825 are stored as additional charges to reservation fees when congestion rates exceed the congestion rate upper limits 823, and as discounts for reservation fees when congestion rates fall below the congestion rate lower limits 824. It is noted that values of the additional charges are not necessarily equal to values of the discounts.

### (Calculation example of payment)

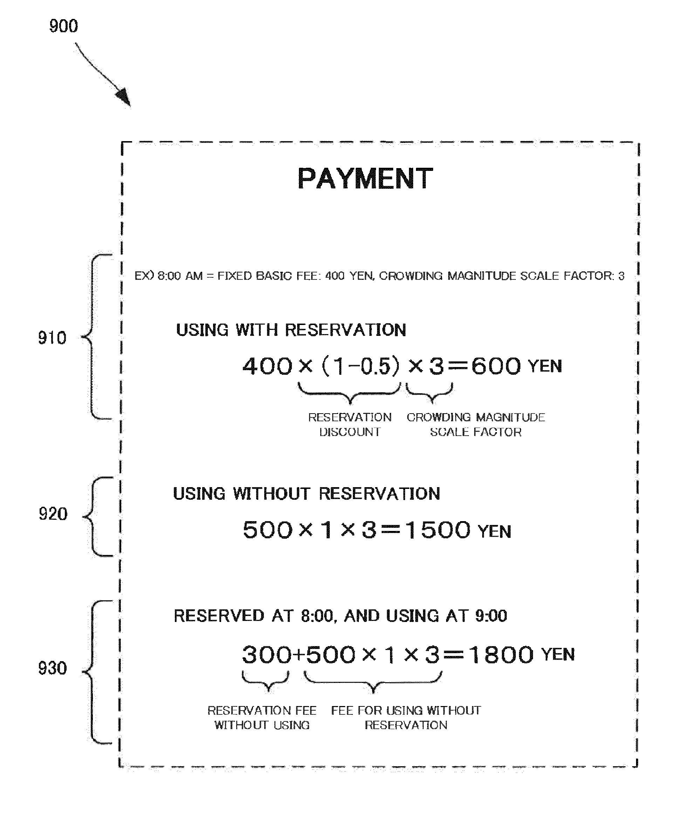

FIG. 9 is a diagram showing an example of a payment 900 according to this embodiment. A payment is charged afterwards in this embodiment, while the payment method is not limited to this. FIG. 9 describes cases where a basic fee of FIG. 6, a fee of section A in the reservation fee table of FIG. 7, and a congestion degree class of FIG. 8A are used. A condition is that at 8:00 in the morning, a fixed basic fee is 400 yen, and a scale factor of crowding magnitude is 3.

An effective reservation fee 910 is a payment when a reservation is made and used. The basic fee of FIG. 6, 400 yen, is discounted as a reservation discount to the half price, 200 yen, then multiplied by the scale factor of the crowding magnitude 3 to make a payment of 600 yen.

A no reservation fee 920 is a payment when a road is used without reservation. 500 yen indicated in a field of Fu in section A of FIG. 7 is multiplied by the scale factor of the crowding magnitude 3, to make a payment of 1500 yen.

An ineffective reservation fee 930 is a case where a road is reserved at 8:00 but used at different time of 9:00. 300 yen indicated in a field X of section A of FIG. 7 is added to 1500 yen for a charge for using a road without reservation to make a payment of 1800 yen. While, in this case, a difference of time of use from the reserved time is one hour, a reservation time width may be changed depending on a difference in crowding magnitude (change speed), the number of lanes, and the like of a road. That is, one-hour time difference may be tolerated, or thirty-minute difference may be out of reservation.

It is noted that, as is explained with the reservation fee table, an appropriate fee structure can be configured for setting reservation fees and payments depending on a purpose.

### (DB for predicting congestion degree)

FIG. 10 is an explanatory diagram of a DB for predicting congestion degree 216, in the information processing apparatus, according to this embodiment.

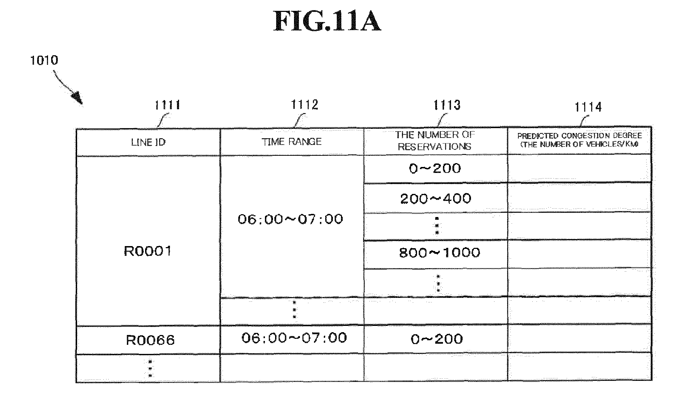

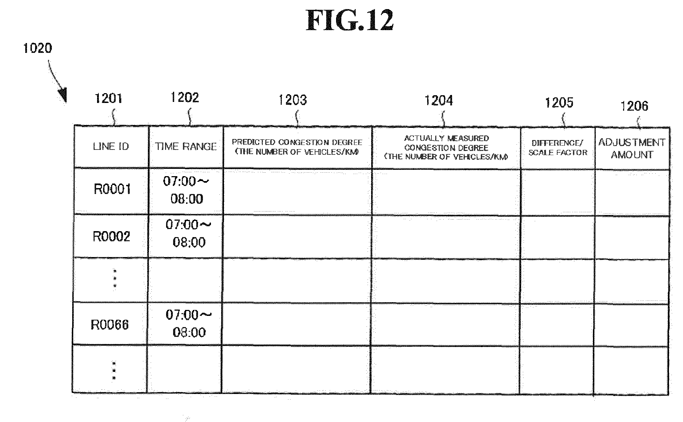

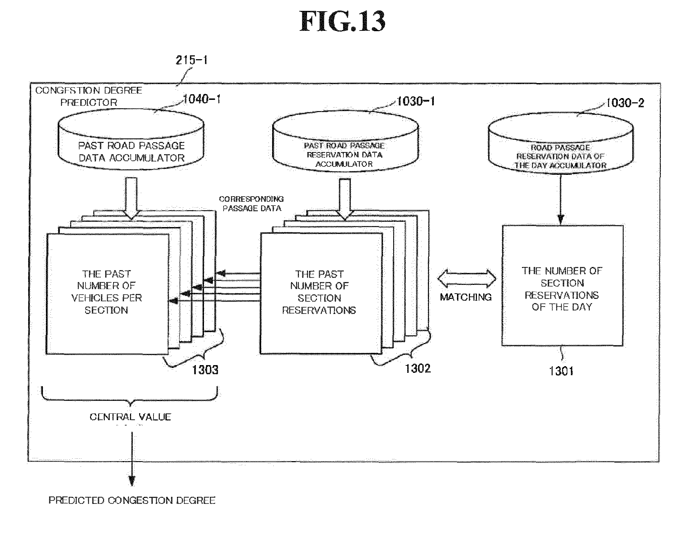

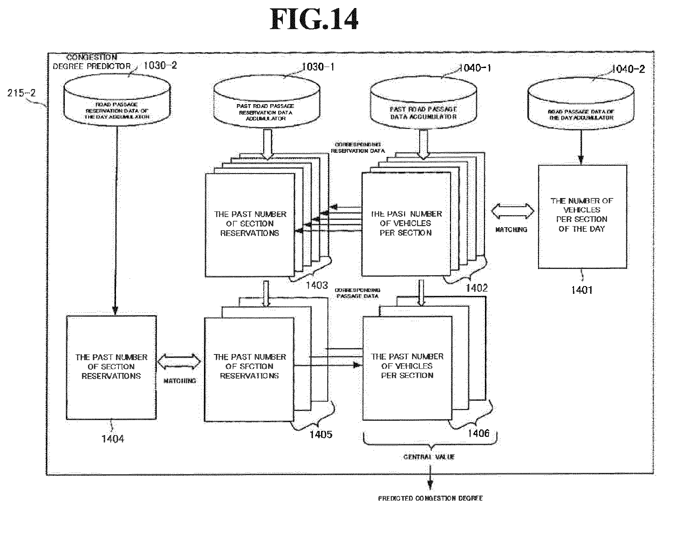

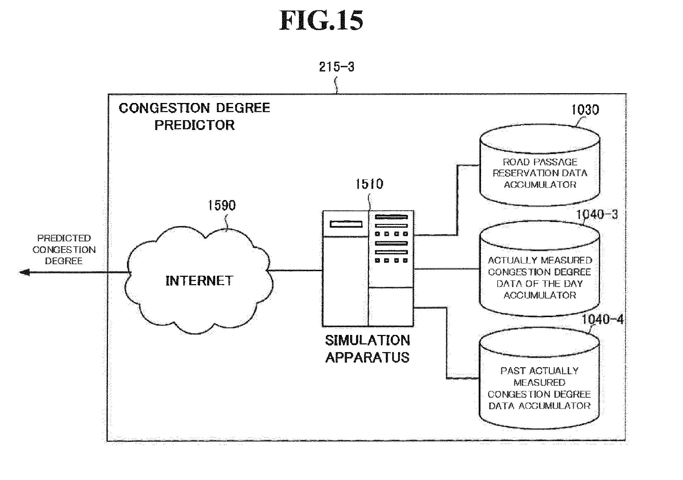

The DB for predicting congestion degree 216 includes tables that are used for predicting congestion degree based on reservation information, and accumulators that accumulate reservation data and congestion degree. The tables include a reservation/congestion degree association table 1010 (refer to FIG. 11A) for converting reservation information into predicted congestion degree, and a congestion degree prediction adjustment table 1020 (refer to FIG. 12) for adjusting prediction of congestion degree according to actually measured congestion degree. Further, the accumulators include a road passage reservation data accumulator 1030 (refer to FIGS. 13 and 14) that accumulates road passage reservation data from users in association with roads and time ranges and a congestion degree accumulator 1040 (refer to FIG. 15) that accumulates predicted congestion degree and actually measured congestion degree. The following will describe respective tables and accumulators, and examples of congestion degree prediction based on reservation information using the tables and the accumulators.

### (Reservation/congestion degree association table)

FIG. 11A is a diagram showing a reservation/congestion degree association table 1010 according to this embodiment.

The reservation/congestion degree association table 1010 stores predicted congestion degree (the number of vehicles per km) 1114 corresponding to the number of reservations 1113 in association with line IDs 1111 and time ranges 1112. It is noted that classification of the number of reservations 1113 is not limited to the one of FIG. 11A. Further, although FIG. 11A shows an example where predicted congestion degree 1114 is stored in numerical values, the predicted congestion degree may be stored in predicted congestion degree levels such as Large, Middle, and Small as shown in FIG. 8A.

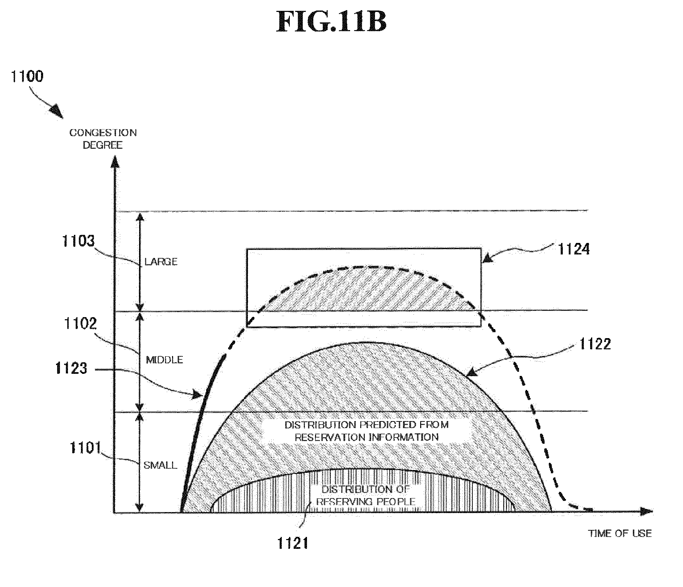

FIG. 11B is an explanatory diagram of relativity 1100 between reservation and congestion degree according to this embodiment.

Relativity 1100 of FIG. 11B shows a case where a horizontal axis indicates time of use and a vertical axis indicates congestion degree. In the relativity 1100, congestion degree is indicated by Small class 1101, Middle class 1102, and Large class 1103 shown in FIG. 8A.

In FIG. 11B, distribution of the number of reserving people 1121 is how the number of reserving people is distributed. Predicted distribution of congestion degree 1122 is distribution of congestion degree predicted in the case of the distribution of the number of reserving people 1121. It is noted that FIG. 11B only shows to the extent that the relationship can be understood. Actually measured congestion degree 1123 indicated by a solid line in FIG. 11B is congestion degree that is actually measured. FIG. 11B shows that the actually measured congestion degree 1123 increases over the predicted distribution of congestion degree 1122. A reason for the increase of the actually measured congestion degree 1123 may be considered, for example, a case where there is a certain event and users without reservation pass through the road, or a traffic accident occurs.

A dashed line following the solid line of the actually measured congestion degree 1123 is a prediction of actually measured congestion degree. If the congestion degree keeps rising, the congestion degree rises to a range of Large class 1124 at the peak of the congestion degree, which causes a traffic jam. Thus, when actually measured congestion degree is shifted above predicted congestion degree, some sort of congestion alleviation approach has to be taken, along with adjustment of predicted congestion degree.

The following will describe adjustment of predicted congestion degree with reference to FIG. 12, while a congestion alleviation approach will be described in the fourth embodiment and later.

### (Congestion degree prediction adjustment table)

FIG. 12 is a diagram showing a congestion degree prediction adjustment table 1020 according to this embodiment.
The congestion degree prediction adjustment table 1020 is used, when actually measured congestion degree appears to be different from predicted congestion degree, to adjust the predicted congestion degree close to the actually measured congestion degree.

The congestion degree prediction adjustment table 1020 stores predicted congestion degree 1203 and actually measured congestion degree 1204 in the present time range 1202 (7:00 to 8:00 in FIG. 12) in association with line IDs 1201. Further, the table stores differences or scale factors 1205 between predicted congestion degree 1203 and actually measured congestion degree 1204, and adjustment amounts 1206 according thereto. It is noted that the adjustment amounts 1206 may be the same as the difference/scale factors 1205.

### (Prediction examples of congestion degree predictor)

The following will describe several examples of predicted congestion degree examples of a congestion degree predictor 215. It is noted that predicted congestion degree is not limited to the following examples.

As a prediction example to be made by the congestion degree predictor 215 according to this embodiment, the relationship between flow Q and density ρ described with FIG. 8A can be considered to be used. Since, for example, in a Small class region, the number of entering vehicles and speed has a proportional relationship, when five (vehicles per km) are in two lanes, and one of the lanes is closed due to an accident, for example, ten (vehicles per km) are in the remaining one lane. In such a case, the flow is predicted as 50 (vehicles per 5min). In this way, prediction is possible until a Middle class where proportional relationship between flow Q and density ρ exists.

FIG. 13 is a diagram showing a prediction example 215-1 of the congestion degree predictor 215 according to this embodiment.

In FIG. 13, the congestion degree predictor 215 extracts, from a past road passage reservation data accumulator 1030-2, a plurality of the past number of section reservations 1302 close to the number of section reservations of the day 1301 accumulated in a road passage reservation data accumulator of the day 1030-1 by matching. In the matching, for example, past ten numbers of section reservations 1302 are extracted using square errors.

Next, the congestion degree predictor 215 reads out the past number of vehicles per section 1303 of the same day and the following time range corresponding to the past number of section reservations 1302, from a past road passage data accumulator (congestion degree accumulator) 1040-1. The congestion degree predictor 215 outputs a central value of the past number of vehicles per section 1303 as predicted congestion degree. Alternatively, the predicted congestion degree may be an average value, or the largest value in order to stress congestion alleviation, instead of the central value.

FIG. 14 is a diagram showing a first variant 215-2 of the prediction example of the congestion degree predictor 215 according to this embodiment. FIG. 14 is a diagram showing a procedure example of a prediction made faster than the one of FIG. 13.

In FIG. 14, before predicting congestion degree, the congestion degree predictor 215 extracts, in advance, from a past road passage data accumulator 1040-1, a plurality of the past number of vehicles per section 1402 close to the number of vehicles per section of the day 1401 accumulated in a road passage data of the day accumulator 1040-2 by matching. In the matching, for example, past ten numbers of vehicles per section 1402 are extracted using square errors.

Next, the congestion degree predictor 215 reads out the past number of section reservations 1403 of the same day and the prior time range corresponding to the past number of vehicles per section 1402, from a past road passage reservation data accumulator 1030-1.

Next, the congestion degree predictor 215 selects, from the past number of section reservations 1403, the past number of section reservations 1405 close to the number of section reservations of the day 1404 in a road passage reservation data of the day accumulator 1030-2. The congestion degree predictor 215 outputs a central value of the past number of vehicles per section 1406 corresponding to the selected past records of the number of section reservations 1405 as predicted congestion degree. Alternatively, the predicted congestion degree may be an average value, or the largest value in order to stress congestion alleviation, instead of the central value.

FIG. 15 is a diagram showing a second valiant 215-3 of the prediction example of the congestion degree predictor 215 according to this embodiment.

In FIG. 15, the congestion degree predictor 215 simulates predicted congestion degree using an outside simulation apparatus 1510 via the Internet 1590. The simulation apparatus 1510 uses data from a road passage reservation data accumulator 1030, an actually measured congestion degree data of the day accumulator 1040-3, and a past actually measured congestion degree data accumulator 1040-4, and predicts congestion degree.

### (Hardware configuration of information processing apparatus)

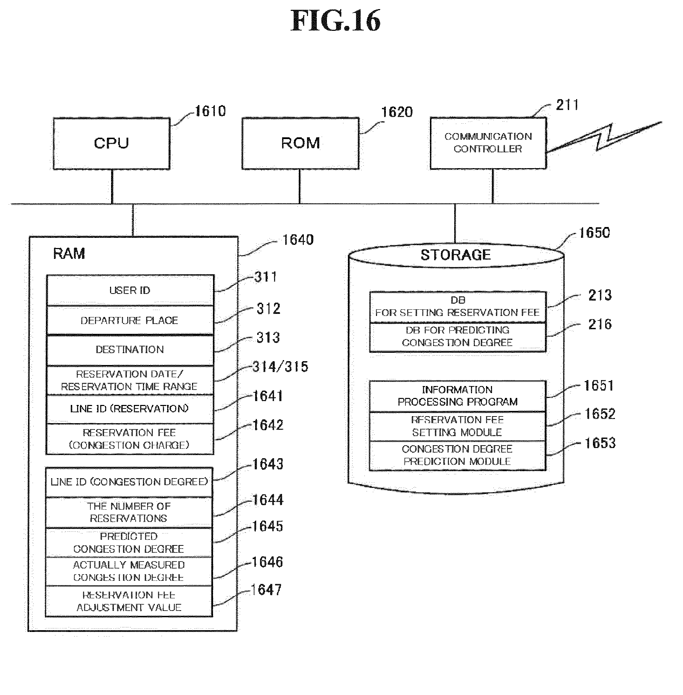

FIG. 16 is a hardware configuration diagram of an information processing apparatus 210 according to this embodiment.

In FIG. 16, a CPU 1610 is a processor for arithmetic control, that realizes functional components of the information processing apparatus 210 of FIG. 2 by executing a program. A ROM 1620 stores initial data, fixed data for programs and the like, and programs. A communication controller 211 transmits and receives data to and from a user terminal via a network, or receives actually measured congestion degree from the actual congestion degree measurer 230.

A RAM 1640 is a random access memory used as a temporary storage work area by the CPU 1610. In the RAM 1640, an area for storing data necessary for realization of this embodiment is allocated. The RAM 1640 stores a user ID 311, a departure place 312 and a destination 313 which are input from the user terminal. In addition, the RAM 1640 stores a reservation date 314/a reservation time range 315 which are input from the user terminal. Further, the RAM 1640 stores a line ID 1641 for reservation, a reservation fee 1642 including a congestion charge, a line ID 1643 for predicting congestion degree, the number of reservations 1644 corresponding to the line ID 1643, predicted congestion degree 1645, actually measured congestion degree 1646, and a reservation fee adjustment value 1647.

A storage 1650 stores databases and a variety of parameters, or the following data or programs necessary for realizing this embodiment. The storage 1650 stores a DB for setting reservation fee 213 and a DB for predicting congestion degree 216. The storage 1650 stores an information processing program 1651 that causes general processing to be executed, a reservation fee setting module 1652 that sets a reservation fee in the information processing program 1651, and a congestion degree prediction module 1653 that predicts congestion degree in the information processing program 1651.

It is noted that FIG. 16 indicates only data and programs necessary for this embodiment, yet, does not illustrate general-purpose data or programs, such as an Operating System (OS).

### (Control processing of information processing apparatus)

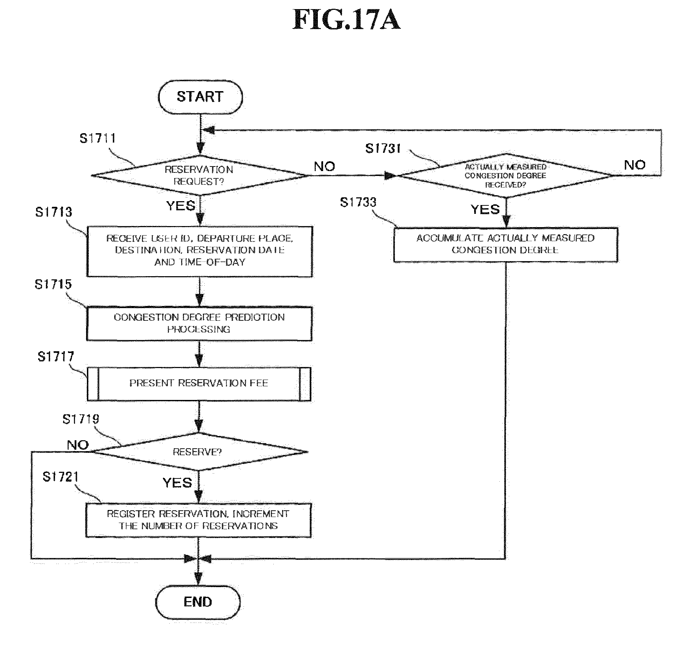

FIG. 17A is a flowchart of control processing of the information processing apparatus according to this embodiment. In this flowchart, the CPU 1610 runs while using the RAM 1640 to realize the functional components of the information processing apparatus 210 of FIG. 2.

First, at Step S1711, the reservation collector 214 determines whether or not there is a reservation request of a road from a user terminal. Further, at Step S1731, the actually measured congestion degree receiver 217 determines whether or not actually measured congestion degree is received.

If there is a reservation request from a user terminal, the processing proceeds to Step S 1713, then, the reservation collector 214 receives a user ID, a departure place, a destination, and a reservation date and time-of-day input from the input screen 310 of FIG. 3. Next, at Step S 1715, the congestion degree predictor 215 carries out congestion degree prediction processing as described above in FIGS. 13 to 15. At Step S1717, the reservation fee setter 212 sets a reservation fee and presents the reservation fee on the user terminal.

At Step S1719, the information processing apparatus 210 awaits the RESERVE button 314 to be pressed at the user terminal. If there is a reservation, the processing proceeds to Step S1721, then, the information processing apparatus 210 registers the reservation along with the user ID and the reservation date and time-of-day, and adds 1 to the number of reservations of a corresponding road in a corresponding time range. If there is no reservation, the information processing apparatus 210 ends the processing.
If actually measured congestion degree is received, the processing proceeds to Step S1733, then the congestion degree predictor 215 accumulates the actually measured congestion degree for adjustment of congestion degree prediction.

### (Reservation fee presentation processing)

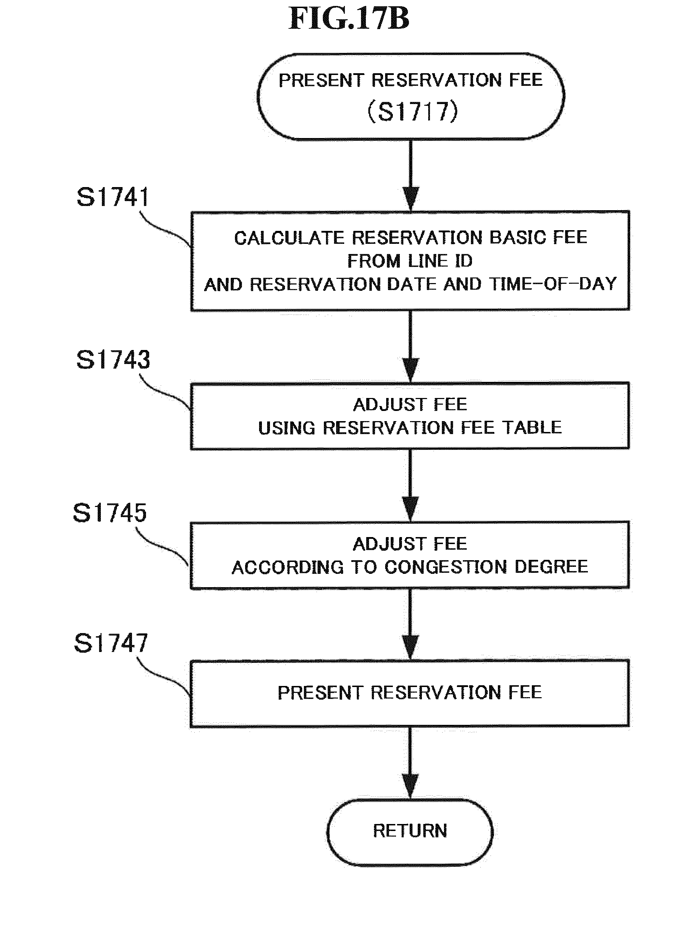

FIG. 17B is a flowchart of reservation fee presentation processing S 1717 according to this embodiment.

At Step S1741, the reservation fee setter 212 calculates a reservation basic fee from the line ID and the reservation date and time-of-day (refer to FIGS. 5 and 6). Next, at Step S1743, the reservation fee setter 212 adjusts a reservation fee using a reservation fee table (refer to FIG. 7). At Step S1745, the reservation fee setter 212 adjusts the fee according to congestion degree. It is noted that the fee adjustment according to congestion degree includes at least either adjustment by predicted congestion degree or adjustment by actually measured congestion degree. Then, at Step S 1747, the reservation fee setter 212 presents the reservation fee (refer to 320 of FIG. 3). It is noted that the fee adjustment according to congestion degree at step S1745 is optional and not always necessary.

### (Third Embodiment)

The following will describe a traffic control system according to a third embodiment of the present invention. The traffic control system according to this embodiment is different from the second embodiment described above in a point where an information processing apparatus limits the number of reservations for alleviating congestion. In this embodiment, a part relating to limitation of the number of reservations will be described. Other components and operations are the same as those of the second embodiment, thus, the detail description is omitted.

According to this embodiment, congestion can be further alleviated by processing road passage reservations.

### (Functional components of information processing apparatus)

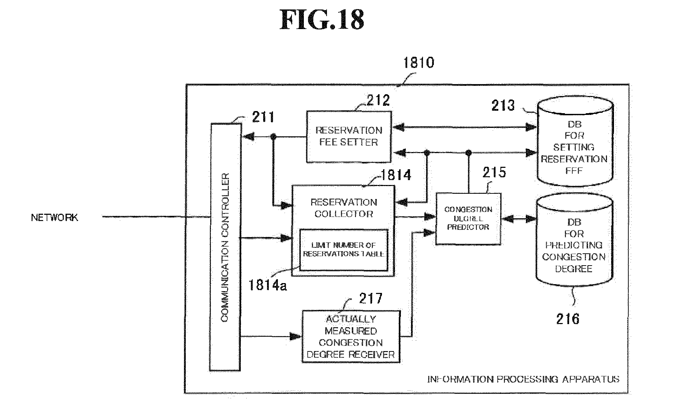

FIG. 18 is a block diagram showing functional components of an information processing apparatus 1810 according to this embodiment. It is noted that difference between the information processing apparatus 1810 and the information processing apparatus 210 of the second embodiment is a reservation collector 1814. As other functional components are the same as those of the information processing apparatus 210, the description thereof is omitted.

A reservation collector 1814 includes a limit number of reservations table 1814a. Then, the reservation collector 1814 limits the number of reservations by referring to the limit number of reservations table 1814a based on events and predicted congestion degree from the congestion degree predictor 215. By limiting the number of reservations in this way, the reservation collector 1814 alleviates increase of congestion degree of a road.

### (Limit number of reservations table)

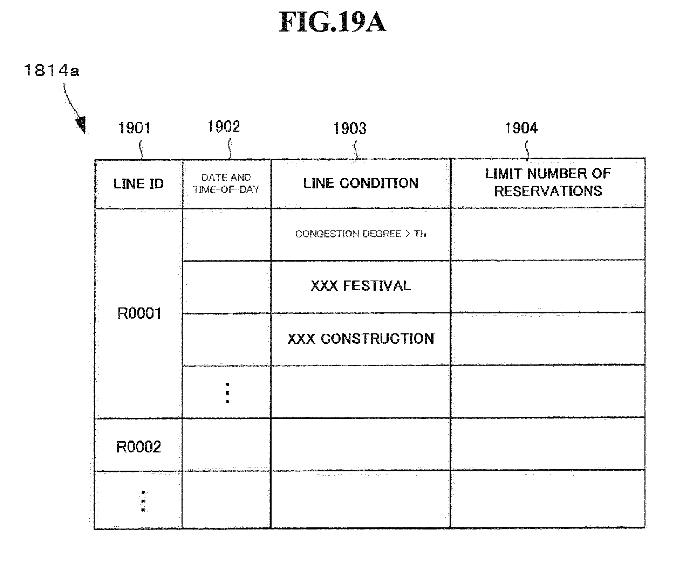

FIG. 19A is a diagram showing the limit number of reservations table 1814a according to this embodiment.

The limit number of reservations table 1814a stores line conditions 1903 and the limit number of reservations 1904 that are conditions to limit the number of reservations, in association with line IDs 1901 and dates and times of days 1902. FIG. 19A stores, as line conditions 1903, a case where congestion degree exceeds a threshold Th, a planned festival, a construction on a line, and the like. It is noted that congestion degree includes predicted congestion degree and actually measured congestion degree. Moreover, the line conditions 1903 of FIG. 19A are only an example without limitation thereto.

### (Control processing of information processing apparatus)

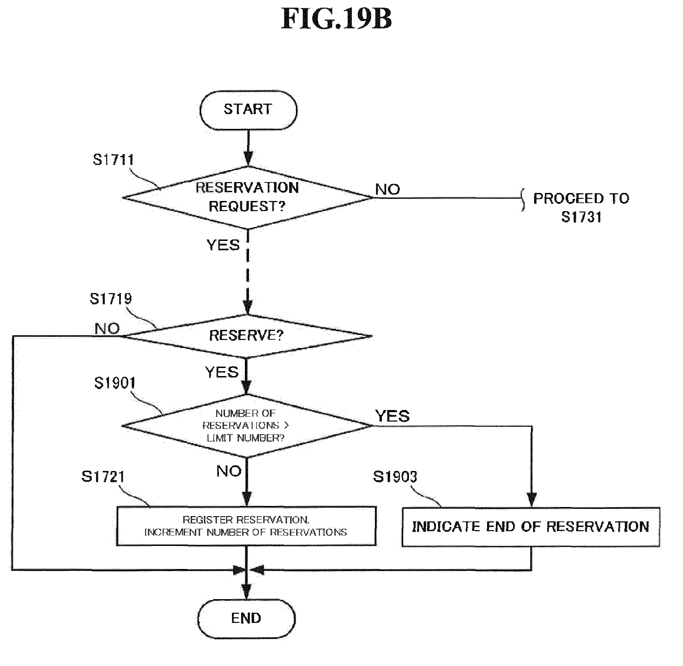

FIG. 19B is a flowchart of control processing of the information processing apparatus according to this embodiment.
FIG. 19B only shows features of this embodiments, and other steps of FIG. 17A of the second embodiment are omitted.

At Step S1711, if there is a reservation request of a road from a user terminal, the reservation collector 1814 proceeds the processing to Step S 1713. After this, the information processing apparatus 1810 carries out Steps S 1703 to S 1717 in the same way as FIG. 17A. Then, after determining that a reservation is entered at Step S 1719, the reservation collector 1814 proceeds the processing to Step S1901 to determine whether or not the number of reservations exceeds a limit number.

If the number of reservations does not exceed the limit number, the processing proceeds to Step S1721, and the information processing apparatus 1810 registers the reservation and adds 1 to the number of reservations. On the other hand, if the number of reservations exceeds the limit number, the processing proceeds to Step S 1903, and the information processing apparatus 1810 indicates to the user terminal that the reservation ends and informs that the reservation is not registered. It is noted that a user terminal may display on a reservation input screen the number of available reservations in a numeral, or the number of vehicles, or the like, to inform a limit number in advance to a user.

### (Fourth Embodiment)

The following will describe a traffic control system according to a fourth embodiment of the present invention. The traffic control system according to this embodiment is different from those of the second and third embodiments described above in a point where predicted congestion degree is used for generating information for alleviating congestion. In this embodiment, only a part relating to lane control information, that is information for alleviating congestion, will be described. Other components and operations are the same as those of the second embodiment, thus, the detailed description is omitted.

According to this embodiment, congestion of a road can be further alleviated using congestion degree predicted based on road passage reservations.

### (Configuration of traffic control system)

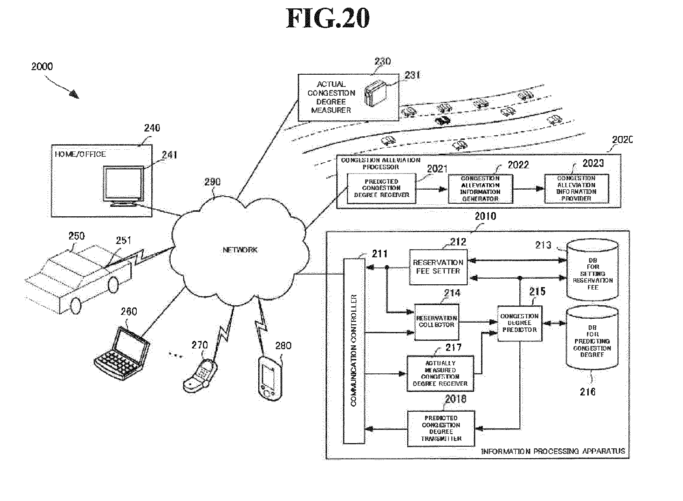

FIG. 20 is a block diagram of a traffic control system 2000 according to this embodiment. It is noted that difference between FIG. 20 and FIG. 2 of the second embodiment is addition of a congestion alleviation processor 2020 and addition of a predicted congestion degree transmitter 2018 in an information processing apparatus 2010. As other functional components are the same as those of FIG. 2, the description is omitted. Further, while, in FIG. 20, the congestion alleviation processor 2020 is provided outside the information processing apparatus 2010, the congestion alleviation processor 2020 may be included in and integrally controlled by the information processing apparatus 2010. Further, the congestion alleviation processor 2020 may be dedicated to congestion alleviation of each road, or may process congestion alleviation of a plurality of roads.

The information processing apparatus 2010 includes a predicted congestion degree transmitter 2018, and transmits predicted congestion degree predicted by the congestion degree predictor 215 to the congestion alleviation processor 2020 via a network.

The congestion alleviation processor 2020 includes a predicted congestion degree receiver 2021, a congestion alleviation information generator 2022, and a congestion alleviation information provider 2023. The predicted congestion degree receiver 2021 receives predicted congestion degree transmitted from the predicted congestion degree transmitter 2018 via a network. The congestion alleviation information generator 2022 generates information for congestion alleviation if congestion alleviation is required, based on the predicted congestion degree received by the predicted congestion degree receiver 2021. The congestion alleviation information provider 2023 provides information for congestion alleviation generated by the congestion alleviation information generator 2022 to administrators of respective roads.

### (Lane control examples)

The following will describe two examples where lane change information is generated based on predicted congestion degree, without limitation to these examples.

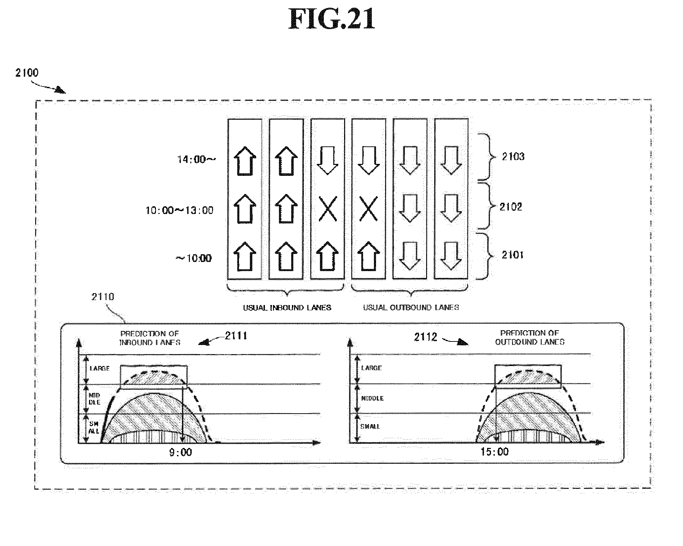

FIG. 21 is a diagram showing a lane control example 2100 of the traffic control system according to this embodiment. It is noted that a line is assumed to have six lanes in FIG. 21.

In FIG. 21, relativity 2110 between reservation of outbound and inbound lanes and congestion degree, shows time variation of predicted congestion degree and actually measured congestion degree of inbound and outbound lanes of a line. In prediction of the inbound lanes 2111, congestion is predicted around 9:00. Meanwhile, in prediction of the outbound lanes 2112, congestion is predicted after 15:00.

The congestion alleviation information provider 2023 generates and provides information of the number of inbound lanes and the number of outbound lanes as information for congestion alleviation, according to above-described prediction of congestion degree. For example, as congestion is predicted in the inbound lanes in a lane control example 2101 before 10:00, the congestion alleviation information provider 2023 provides information that offers four inbound lanes and two outbound lanes. Meanwhile, as no congestion is predicted either in the inbound or outbound lanes in a lane control example 2102 between 10:00 and 13:00, the congestion alleviation information provider 2023 provides information that offers two inbound lanes and two outbound lanes without using two lanes in the center. Then, as congestion is predicted in the outbound lanes in a lane control example 2102 after 14:00, the congestion alleviation information provider 2023 provides information that offers two inbound lanes and four outbound lanes.

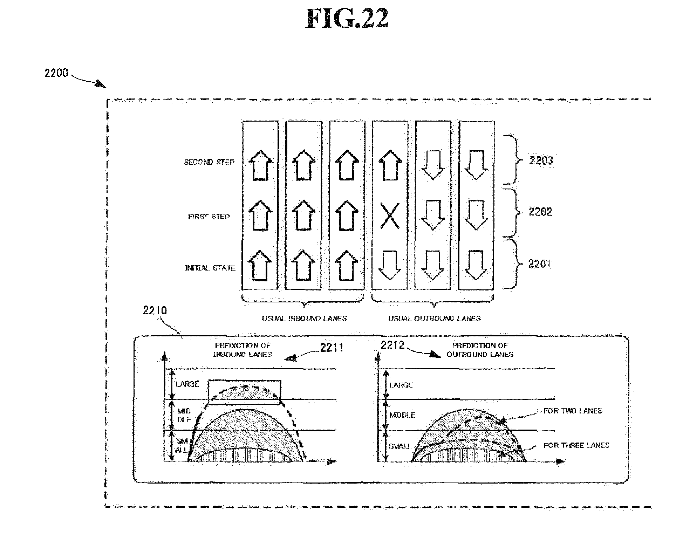

FIG. 22 is a diagram showing a variant of a lane control example 2200 of the traffic control system according to this embodiment. It is noted that a line is also assumed as having six lanes in FIG. 22.

In FIG. 22, relativity 2210 between reservation of inbound and outbound lanes and congestion degree, shows states of the same time of predicted congestion degree and actually measured congestion degree of inbound and outbound lanes. In prediction of the inbound lanes 2211, Large class congestion is predicted. Meanwhile, in prediction of the outbound lanes 2212, no congestion is predicted with three lanes (Small class), and small congestion is predicted with two lanes (Middle level).

The congestion alleviation information provider 2023 generates and provides switching information of the number of inbound lanes and the number of outbound lanes as information for congestion alleviation, according to above-described prediction of congestion degree. The congestion alleviation information provider 2023, for example, provides information that offers three inbound lanes and three outbound lanes at the initial state 2201. Further, according to prediction of congestion degree of the relativity 2210, the inbound lanes will possibly become Large class that causes a traffic jam, thus, information that decreases the outbound lanes to Middle level of two lanes is provided at the first step 2202. Next, at the second step 2203, the congestion alleviation information provider 2023 provides information that adds a lane that is used as an outbound lane to the inbound lanes to make four inbound lanes. It is noted that information for the first step 2202 and the second step 2203 may be separately provided including time control, or may be simultaneously provided including switch time information.

### (Table for congestion alleviation)

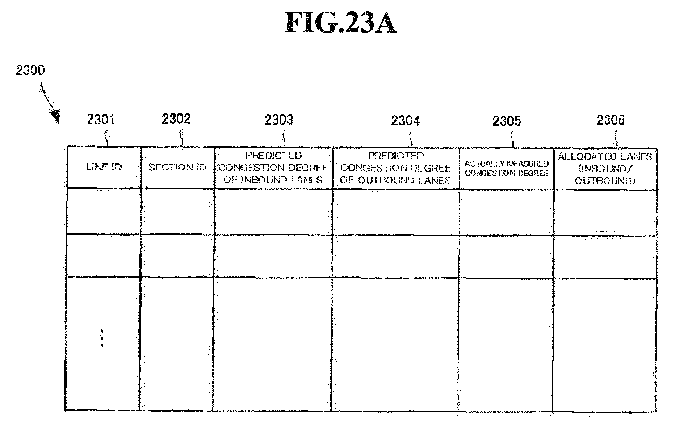

FIG. 23A is a diagram showing a table for congestion alleviation 2300 according to this embodiment. The congestion alleviation information generator 2022 includes the table for congestion alleviation 2300 as a DB. Therefore, if the congestion alleviation processor 2020 is included in the information processing apparatus 2010, the table for congestion alleviation 2300 may be stored in the storage 1650 as a DB.

The table for congestion alleviation 2300 stores allocated lanes 2306 in association with line IDs 2301, section IDs 2302, predicted congestion degree of inbound lanes 2303, predicted congestion degree of outbound lanes 2304, and actually measured congestion degree 2305.

Then, the congestion alleviation processor 2020 reads out and indicates the allocated lane 2306 when predicted congestion degree or actually measured congestion degree satisfies conditions of the table for congestion alleviation 2300, or falls within a set range.

### (Congestion alleviation processing)

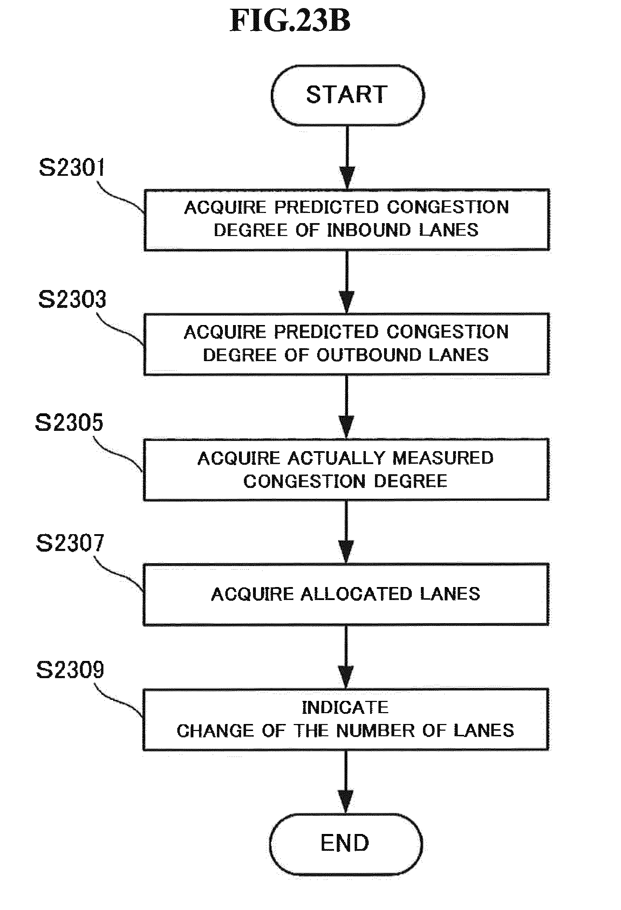

FIG. 23B is a flowchart of congestion alleviation processing according to this embodiment. This flowchart is carried out by a CPU configuring the congestion alleviation processor 2020 to realize respective functional components of the congestion alleviation processor 2020. It is noted that, if the congestion alleviation processor 2020 is included in the information processing apparatus 2010, the CPU 1610 of FIG. 16 may carry out this flowchart to realize respective functional components.

First, at Step S2301, the predicted congestion degree receiver 2021 acquires predicted congestion degree of inbound lanes. Next, at Step S2303, the predicted congestion degree receiver 2021 acquires predicted congestion degree of outbound lanes. At Step S2305, the predicted congestion degree receiver 2021 acquires actually measured congestion degree. At Step S2307, the congestion alleviation information generator 2022 acquires the allocated lanes 2306 from the table for congestion alleviation 2300 based on the predicted congestion degree and/or the actually measured congestion degree of the inbound and outbound lanes. Then, at Step S2309, when there is a change in the number of lanes according to the acquired allocated lane 2306, the congestion alleviation information provider 2023 indicates the change of the number of lanes.

### (Fifth Embodiment)

The following will describe a traffic control system according to a fifth embodiment of the present invention. The traffic control system according to this embodiment is different from the one of the fourth embodiment described above in a point where congestion degree predicted by the congestion alleviation information generator 2022 is used to generate traffic light switch information that is information for congestion alleviation. In this embodiment, a part related to the traffic light switch information that is information for congestion alleviation will be described. Other components and operations are the same as those of the second embodiment, thus, the detailed description is omitted.

According to this embodiment, congestion of a road can be further alleviated using congestion degree predicted based on road passage reservations.

### (Table for congestion alleviation)

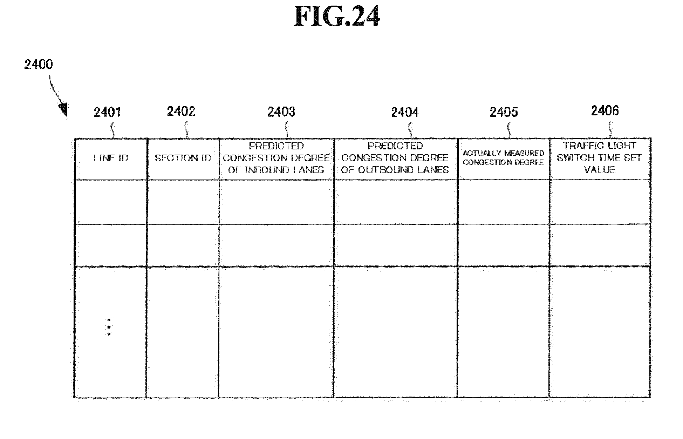

FIG. 24 is a diagram showing a table for congestion alleviation 2400 according to this embodiment. The congestion alleviation information generator 2022 includes the table for congestion alleviation 2400 as a DB. Thus, if the congestion alleviation processor 2020 is included in the information processing apparatus 2010, the table for congestion alleviation 2400 may be stored in the storage 1650 as a DB.

The table for congestion alleviation 2400 stores traffic light switch time set values 2406 in association with line IDs 2401, section IDs 2402, predicted congestion degree of inbound lanes 2403, predicted congestion degree of outbound lanes 2404, and actually measured congestion degree 2405.

Then, the congestion alleviation processor 2020 reads out and indicates the traffic light switch time set value 2406, when predicted congestion degree or actually measured congestion degree satisfies conditions of the table for congestion alleviation 2400, or falls within a set range.

### (Congestion alleviation processing)

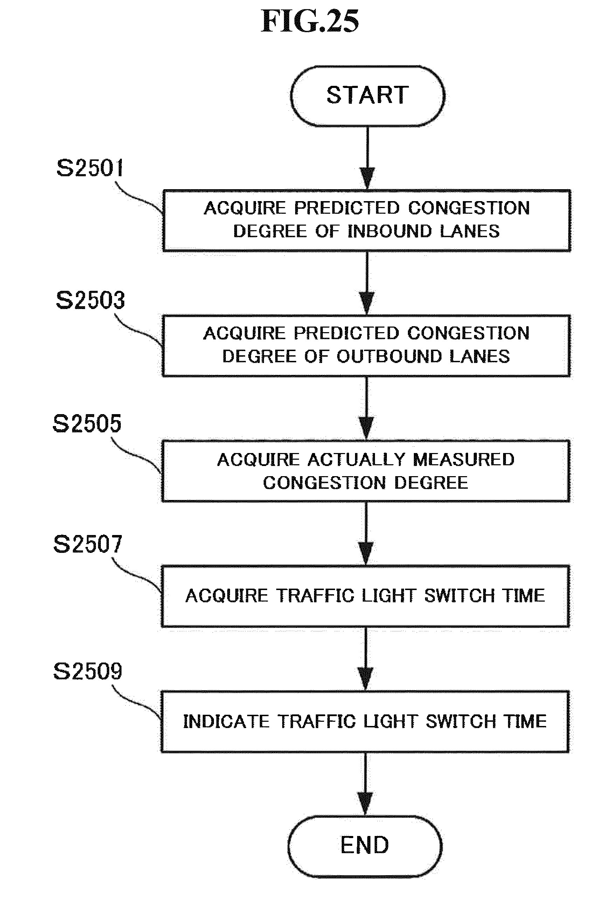

FIG. 25 is a flowchart of congestion alleviation processing according to this embodiment. This flowchart is carried out by a CPU configuring the congestion alleviation processor 2020 to realize respective functional components of the congestion alleviation processor 2020. It is noted that, if the congestion alleviation processor 2020 is included in the information processing apparatus 2010, the CPU 1610 of FIG. 16 may carry out this flowchart to realize respective functional components.

First, at Step S2501, the predicted congestion degree receiver 2021 acquires predicted congestion degree of inbound lanes. Next, at Step S2503, the predicted congestion degree receiver 2021 acquires predicted congestion degree of outbound lanes. At Step S2505, the predicted congestion degree receiver 2021 acquires actually measured congestion degree. At Step S2507, the congestion alleviation information generator 2022 acquires the traffic light switch time set value 2406 from the table for congestion alleviation 2400 based on the predicted congestion degree and/or the actually measured congestion degree of the inbound and outbound lanes. Then, at Step S2509, when there is a change in the acquired traffic light switch time set value 2406, the congestion alleviation information provider 2023 indicates the traffic light switch time.

### (Sixth Embodiment)

The following will describe a traffic control system according to a sixth embodiment of the present invention. The traffic control system according to this embodiment is different from those of the fourth and fifth embodiments described above in a point where congestion degree predicted by the congestion alleviation information generator 2022 is used to generate speed limit information that is information for congestion alleviation. In this embodiment, a part relating to the speed limit information that is information for congestion alleviation will be described. Other components and operations are the same as those of the second embodiment, thus, the detailed description is omitted.

According to this embodiment, congestion of a road can be further alleviated using congestion degree predicted based on road passage reservations.

### (Table for congestion alleviation)

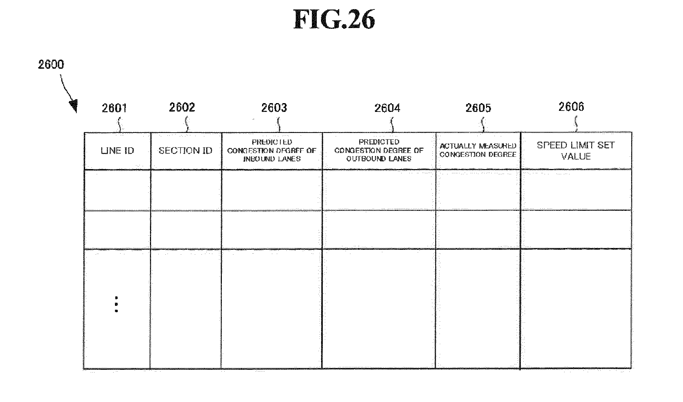

FIG. 26 is a diagram showing a table for congestion alleviation 2600 according to this embodiment. The congestion alleviation information generator 2022 includes the table for congestion alleviation 2600 as a DB. Thus, if the congestion alleviation processor 2020 is included in the information processing apparatus 2010, the table for congestion alleviation 2600 may be stored in the storage 1650 as a DB.

The table for congestion alleviation 2600 stores speed limit set values 2606, in association with line IDs 2601, section IDs 2602, predicted congestion degree of inbound lanes 2603, predicted congestion degree of outbound lanes 2604, and actually measured congestion degree 2605.

Then, the congestion alleviation processor 2020 reads out and indicates the speed limit set value 2606, when predicted congestion degree or actually measured congestion degree satisfies conditions of the table for congestion alleviation 2600, or falls within a set range.

### (Congestion alleviation processing)

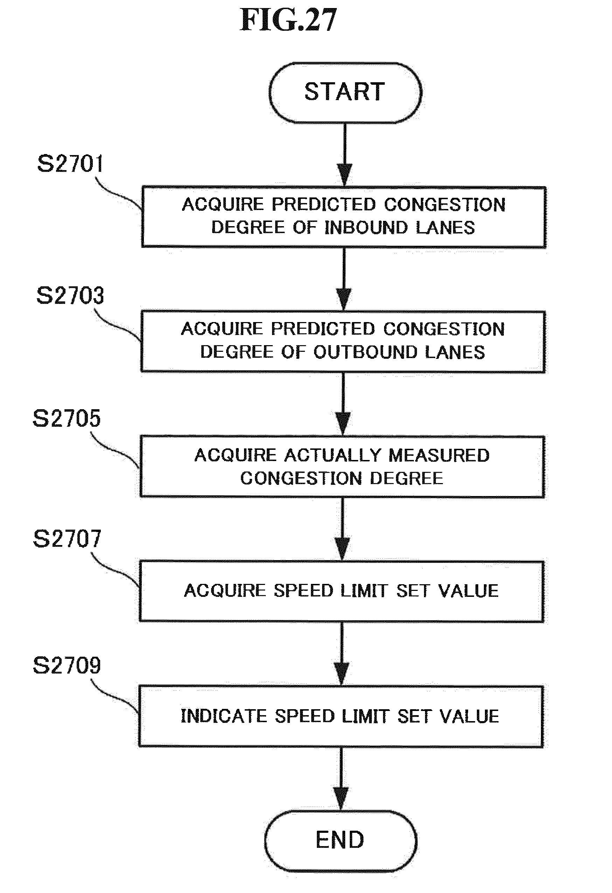

FIG. 27 is a flowchart of congestion alleviation processing according to this embodiment. This flowchart is carried out by a CPU configuring the congestion alleviation processor 2020 to realize respective functional components of the congestion alleviation processor 2020. It is noted that, if the congestion alleviation processor 2020 is included in the information processing apparatus 2010, the CPU 1610 of FIG. 16 may carry out this flowchart to realize respective functional components.

First, at Step S2701, the predicted congestion degree receiver 2021 acquires predicted congestion degree of inbound lanes. Next, at Step S2703, the predicted congestion degree receiver 2021 acquires predicted congestion degree of outbound lanes. At Step S2705, the predicted congestion degree receiver 2021 acquires actually measured congestion degree. At Step S2707, the congestion alleviation information generator 2022 acquires the speed limit set value 2606 from the table for congestion alleviation 2600 based on the predicted congestion degree and/or the actually measured congestion degree of the inbound and outbound lanes. Then, at Step S2709, when there is a change in the acquired speed limit set value 2606, the congestion alleviation information provider 2023 indicates the speed limit set value.

### (Seventh Embodiment)

The following will describe a traffic control system according to a seventh embodiment of the present invention. The traffic control system according to this embodiment is different from those of the fourth to sixth embodiments described above in a point where congestion degree predicted by the congestion alleviation information generator 2022 is used to generate freeway gate information that is information for congestion alleviation. In this embodiment, a part relating to the gate information that is information for congestion alleviation will be described. Other components and operations are the same as the second embodiment, thus, the detailed description is omitted.

According to this embodiment, congestion of a road can be further alleviated using congestion degree predicted based on road passage reservations.

### (Table for congestion alleviation)

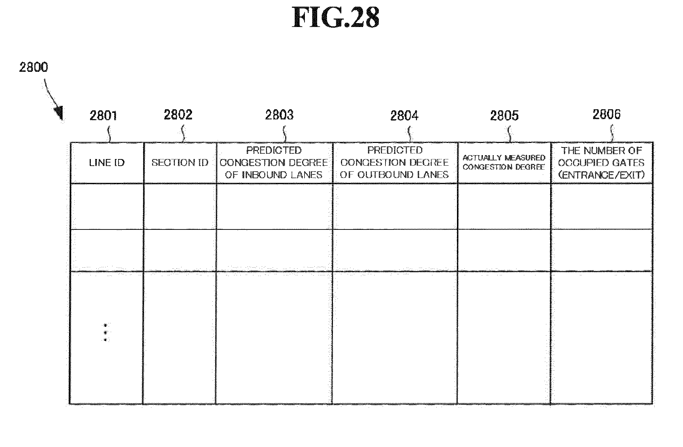

FIG. 28 is a diagram showing a table for congestion alleviation 2800 according to this embodiment. The congestion alleviation information generator 2022 includes the table for congestion alleviation 2800 as a DB. Thus, if the congestion alleviation processor 2020 is included in the information processing apparatus 2010, the table for congestion alleviation 2800 may be stored in the storage 1650 of FIG. 16 as a DB.

The table for congestion alleviation 2800 stores the number of occupied gates 2806 in association with line IDs 2801, section IDs 2802, predicted congestion degree of inbound lanes 2803, predicted congestion degree of outbound lanes 2804, and actually measured congestion degree 2805.

Then, the congestion alleviation processor 2020 reads out and indicates the number of occupied gates 2806 when predicted congestion degree or actually measured congestion degree satisfies conditions of the table for congestion alleviation 2800, or falls within a set range.

### (Congestion alleviation processing)

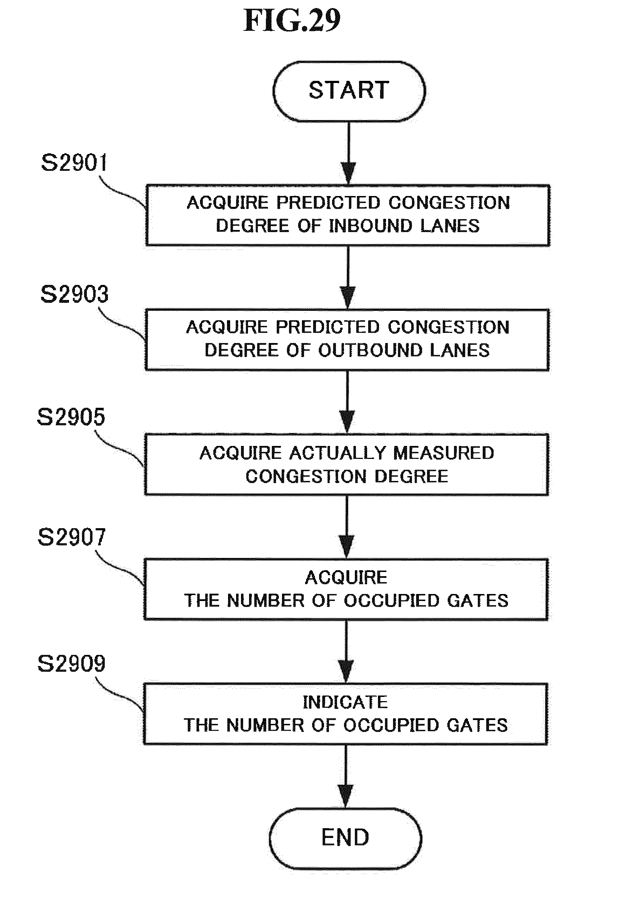

FIG. 29 is a flowchart of congestion alleviation processing according to this embodiment. This flowchart is carried out by a CPU configuring the congestion alleviation processor 2020 to realize respective functional components of the congestion alleviation processor 2020. It is noted that, if the congestion alleviation processor 2020 is included in the information processing apparatus 2010, the CPU 1610 of FIG. 16 may carry out this flowchart to realize respective functional components.

First, at Step S2901, the predicted congestion degree receiver 2021 acquires predicted congestion degree of inbound lanes. Next, at Step S2903, the predicted congestion degree receiver 2021 acquires predicted congestion degree of outbound lanes. At Step S2905, the predicted congestion degree receiver 2021 acquires actually measured congestion degree. At Step S2907, the congestion alleviation information generator 2022 acquires the number of occupied gates 2806 from the table for congestion alleviation 2800 based on the predicted congestion degree and/or the actually measured congestion degree of the inbound and outbound lanes. Then, at Step S2909, when there is a change in the acquired number of occupied gates 2806, the congestion alleviation information provider 2023 indicates the number of occupied gates.

### (Eighth Embodiment)

The following will describe a traffic control system according to an eighth embodiment of the present invention. The traffic control system according to this embodiment is different from those of the second to seventh embodiments described above in a point where congestion degree predicted by the congestion alleviation information provider 2023 is used to deliver information for congestion alleviation to a user. In this embodiment, a part relating to indication of congestion degree information, that is information for congestion alleviation, to a user will be described. Other components and operations are the same as those of the second embodiment, thus, the detailed description is omitted.

According to this embodiment, congestion of a road can be alleviated including judgment by a user, using congestion degree predicted based on road passage reservations.

### (Configuration of traffic control system)

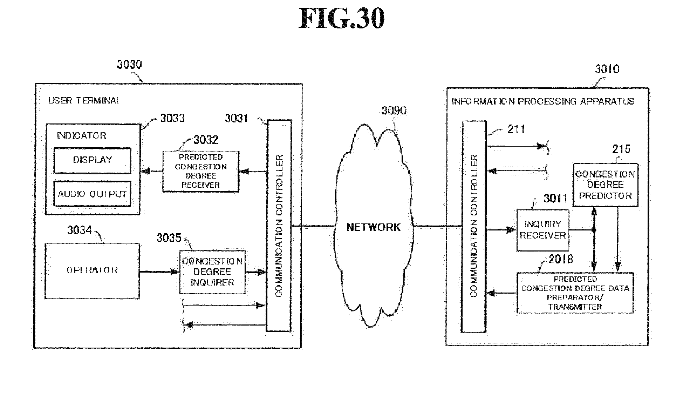

FIG. 30 is a block diagram of a traffic control system of this embodiment. It is noted that FIG. 30 shows only characterizing portions of a user terminal and an information processing apparatus, that are features of this embodiment, thus, other components included in FIGS. 2 and 20 are deleted.

An information processing apparatus 3010 of FIG. 30 includes an inquiry receiver 3011 and a predicted congestion degree data preparator/transmitter 2018 in addition to the information processing apparatus of FIG. 2, 18, or 20. The inquiry receiver 3011 receives a congestion degree inquiry from a user terminal 3030 via a network 3090, and informs the inquiry to the congestion degree predictor 215 and the predicted congestion degree data preparator/transmitter 2018. The predicted congestion degree data preparator/transmitter 2018 prepares display data from predicted congestion degree predicted by the congestion degree predictor 215 and replies to the user terminal via the network 3090.

The user terminal 3030 of FIG. 30 includes a communication controller 3031, a predicted congestion degree receiver 3032, an indicator 3033, an operator 3034, and a congestion degree inquirer 3035, as well as the functions that each user terminal of FIG. 2 or 20 includes. The communication controller 3031 controls communication via the network 3090. The predicted congestion degree receiver 3032 receives predicted congestion degree transmitted by the information processing apparatus 3010. The indicator 3033 displays predicted congestion degree received by the predicted congestion degree receiver 3032 on a display, and/or outputs from an audio output. The operator 3034 inputs operation of a user including an inquiry about congestion degree. The congestion degree inquirer 3035 transmits the congestion degree inquiry input by the operator 3034 to the information processing apparatus 3010 via the communication controller 3031.

### (Display screen of user terminal)

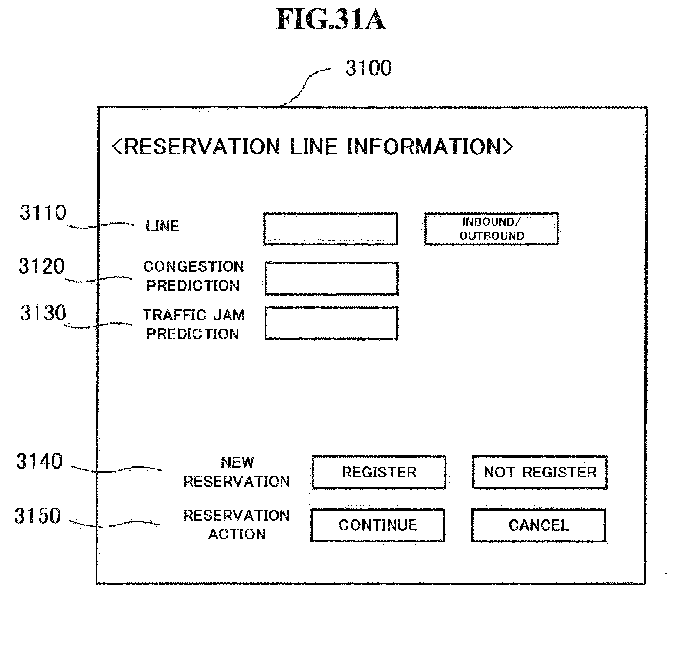

FIG. 31A is a diagram showing a display screen 3100 of the user terminal according to this embodiment. FIG. 31A is a screen showing a reply from the information processing apparatus 3010 in response to a congestion degree inquiry.

A line display 3110 of the display screen 3100 displays a line and inbound/outbound. A congestion prediction display 3120 shows congestion prediction. It is noted that the congestion prediction may be Large/Middle/Small class, a numeral indicating predicted congestion degree, or the like, as long as congestion degree is understood. A traffic jam prediction display 3130 indicates a traffic jam prediction. The traffic jam prediction may be obtained from FIG. 8A. NEW RESERVATION buttons 3140 are buttons for whether or not to register a new reservation by observing congestion prediction/traffic jam prediction displayed above. When the new reservation is selected, the screen transfers to the reservation input screen of FIG. 3. RESERVATION ACTION buttons 3150 are buttons to instruct, when a reservation is already made, whether to continue/cancel the reservation. When CANCEL is selected, a passage reservation for this line is cancelled and the number of reservations is decremented by 1. It is noted that cancellation may have other functions such as a time limit and a priority to change to other lines.

### (Control processing of information processing apparatus)

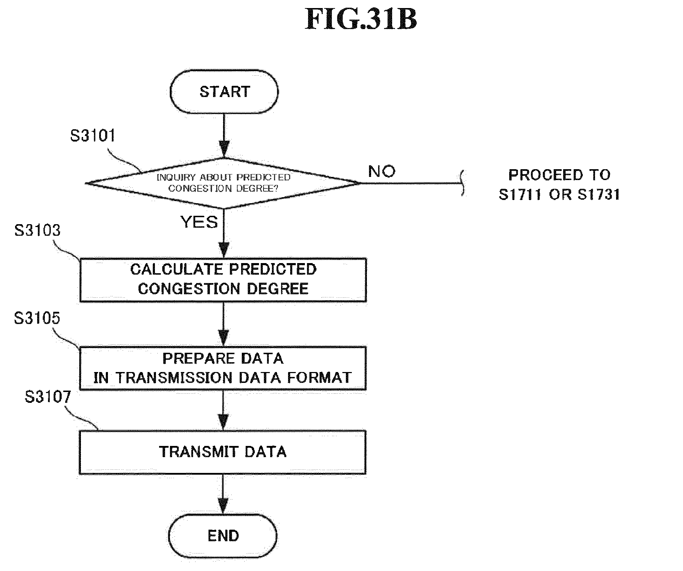

FIG. 31B is a flowchart of control processing of the information processing apparatus 3010 according to this embodiment. This flowchart is carried out by the CPU 1610 of FIG. 16 to realize respective functional components of the information processing apparatus 3010 of FIG. 30. FIG. 31B shows characterizing portions of this embodiment, adding inquiry processing to FIG. 17A of the second embodiment or FIG. 19B of the third embodiment, thus, other steps are omitted.

At Step S3101, the inquiry receiver 3011 determines whether or not an inquiry about predicted congestion degree from a user terminal is received. If no inquiry about predicted congestion degree is received, the processing proceeds to either Step S1711 or S1731 shown in FIGS. 17A and 19B.

If an inquiry about predicted congestion degree is received, the processing proceeds to Step S3103, then the congestion degree predictor 215 calculates predicted congestion degree. Next, at Step S3105, the predicted congestion degree data preparator/transmitter 2018 prepares data in a transmission data format for displaying transmission of the predicted congestion degree. Then, at Step S3107, the predicted congestion degree data preparator/transmitter 2018 transmits the transmission data to the user terminal.

### (Other embodiments)

While the embodiments of the present invention are elaborated so far, a system or an apparatus made in any combination of individual features included in the respective embodiments is also included in the scope of the present invention.

Moreover, the present invention may be applied to a system configured by a plurality of devices or a single device. Further, the present invention is applicable to a case where a control program for realizing the functions of the embodiments is provided directly in a system or an apparatus, or is remotely provided. Thus, the scope of the present invention includes a control program to be installed in a computer to realize the functions of the present invention by the computer, a medium storing the control program, or a WWW (World Wide Web) server for downloading the control program.

Part or whole of the above embodiments can be described as in the following supplementary notes without limitation thereto.

### (Supplementary Note 1)

A traffic control system for alleviating congestion of a road, the traffic control system comprising: a road information database that accumulates road information including congestion degree; reservation fee setting means that refers to the road information accumulated in the road information database and sets a road passage reservation fee for a user; reservation collecting means that collects a road passage reservation from a user for the road passage reservation fee being set; and congestion degree predicting means that predicts congestion degree of a road, including a user who passes without making a road passage reservation, by using information of the road passage reservation collected by the reservation collecting means, wherein predicted congestion degree predicted by the congestion degree predicting means is used for alleviating congestion of a road.

### (Supplementary Note 2)

The traffic control system according to Supplementary Note 1, wherein the reservation fee setting means sets the road passage reservation fee cheaper than a payment for a case where a user passes without reservation, and the road passage reservation fee is charged even when a user does not pass through a reserved road.

### (Supplementary Note 3)

The traffic control system according to Supplementary Note 2, wherein, the payment for a case where a user passes without reservation, a different fee is set for each road and each time range according to predicted congestion degree.

### (Supplementary Note 4)

The traffic control system according to any one of Supplementary Notes 1 to 3, wherein the reservation fee setting means sets the road passage reservation fee according to predicted congestion degree by the congestion degree predicting means.

### (Supplementary Note 5)

The traffic control system according to any one of Supplementary Notes 1 to 4, wherein the reservation collecting means adjusts the number of reservations of the road passage reservation according to predicted congestion degree by the congestion degree predicting means to alleviate congestion of a road.

### (Supplementary Note 6)

The traffic control system according to any one of Supplementary Notes 1 to 5, further comprising: actual congestion degree measurement means that actually measures congestion degree of a corresponding road, wherein the congestion degree predicting means adjusts predicted congestion degree according to actually measured congestion degree of the road that is actually measured by the actual congestion degree measurement means.

### (Supplementary Note 7)

The traffic control system according to any one of Supplementary Notes 1 to 6, further comprising: information providing means that provides information for congestion alleviation based on predicted congestion degree predicted by the congestion degree predicting means.

### (Supplementary Note 8)

The traffic control system according to Supplementary Note 7, wherein the information providing means provides information relating to a change of the number of lanes of a road as the information for congestion alleviation.

### (Supplementary Note 9)

The traffic control system according to either Supplementary Note 7 or 8, wherein the information providing means provides information relating to a change of signal switch time as the information for congestion alleviation.

### (Supplementary Note 10)

The traffic control system according to any one of Supplementary Notes 7 to 9, wherein the information providing means provides information relating to a change of a speed limit of a road as the information for congestion alleviation.

### (Supplementary Note 11)

The traffic control system according to any one of Supplementary Notes 7 to 10, wherein the information providing means provides information relating to the number of occupied gates of a freeway as the information for congestion alleviation.

### (Supplementary Note 12)

The traffic control system according to any one of Supplementary Notes 7 to 11, wherein the information providing means delivers, to a user, information on prediction of congestion degree predicted by the congestion degree predicting means as the information for congestion alleviation.

### (Supplementary Note 13)

A congestion control method for alleviating congestion of a road, the congestion control method including: a reservation fee setting step that refers to road information accumulated in a road information database, that accumulates the road information including congestion degree, and sets a road passage reservation fee for a user; a reservation collecting step that collects a road passage reservation from a user for the road passage reservation fee being set; and a congestion degree predicting step that predicts congestion degree of a road, including a user who passes without making a road passage reservation, by using the road passage reservation collected at the reservation collecting step, wherein predicted congestion degree predicted at the congestion degree predicting step is used for alleviating congestion of a road.

### (Supplementary Note 14)

An information processing apparatus in a traffic control system for alleviating congestion of a road, the information processing apparatus comprising: a road information database that accumulates road information including congestion degree; reservation fee setting means that refers to the road information accumulated in the road information database and sets a road passage reservation fee for a user; reservation collecting means that collects a road passage reservation input by a user via a user terminal for the road passage reservation fee being set; congestion degree predicting means that predicts congestion degree of a road, including a user who passes without making a road passage reservation, by using the road passage reservation collected by the reservation collecting means; and output means that outputs information of predicted congestion degree predicted by the congestion degree predicting means.

### (Supplementary Note 15)

A control method of an information processing apparatus in a traffic control system for alleviating congestion of a road, the control method of an information processing apparatus comprising: a reservation fee setting step that refers to road information accumulated in a road information database, that accumulates the road information including congestion degree, and sets a road passage reservation fee for a user; a reservation collecting step that collects a road passage reservation input by a user via a user terminal for the road passage reservation fee being set; a congestion degree predicting step that predicts congestion degree of a road, including a user who passes without making a road passage reservation, by using the road passage reservation collected at the reservation collecting step; and an output step that outputs information of predicted congestion degree predicted at the congestion degree predicting step.

### (Supplementary Note 16)

A computer-readable storage medium storing a control program of an information processing apparatus in a traffic control system for alleviating congestion of a road, the computer-readable storage medium storing the control program causing a computer to function as: reservation fee setting means that refers to road information accumulated in a road information database, that accumulates the road information including congestion degree, and sets a road passage reservation fee for a user; reservation collecting means that collects a road passage reservation input by a user via a user terminal for the road passage reservation fee being set; congestion degree predicting means that predicts congestion degree of a road, including a user who passes without making a road passage reservation, by using the road passage reservation collected by the reservation collecting means; and output means that outputs information of predicted congestion degree predicted by the congestion degree predicting means.

It is noted that the present invention can be implemented in a variety of embodiments and variants without departing from the broad sense of the spirit and scope of the present invention. Moreover, the above-described embodiments are only for explanation of the present invention, and should not be construed as restricting the scope of the present invention. Therefore, the scope of the present invention is defined not by the embodiments but by the scope of the claims. Then, a variety of modifications made within the scope of the claims and the scope of the sense of the invention equivalent to the claims, fall within the scope of the present invention.

The present invention is based on Japanese Patent Application No. 2011-167690 that was filed on July 29, 2011. The whole specification, claims, drawings of Japanese Patent Application No. 2011-167690 are incorporated herein by reference.

### Reference Signs List

- 100, 200, 2000: Traffic control system
- 101: Road information database, Road information DB
- 102, 212: Reservation fee setter
- 103, 214, 1814: Reservation collector
- 104, 215: Congestion degree predictor
- 105-1 to 105-n: User
- 210, 1810, 2010, 3010: Information processing apparatus
- 211, 3031: Communication controller
- 213: Database for setting reservation fee, DB for setting reservation fee
- 216: DB for predicting congestion degree
- 217: Actually measured congestion degree receiver
- 230: Actual congestion degree measurer
- 240 to 280: User terminals
- 290: Network
- 3030: User terminal

## Claims

1. A traffic control system for alleviating congestion of a road, the traffic control system comprising:
a road information database that accumulates road information including congestion degree;
reservation fee setting means that refers to the road information accumulated in the road information database and sets a road passage reservation fee for a user;
reservation collecting means that collects a road passage reservation from a user for the road passage reservation fee being set; and
congestion degree predicting means that predicts congestion degree of a road, including a user who passes without making a road passage reservation, by using information of the road passage reservation collected by the reservation collecting means,
wherein predicted congestion degree predicted by the congestion degree predicting means is used for alleviating congestion of a road.

2. The traffic control system according to Claim 1, wherein
the reservation fee setting means sets the road passage reservation fee cheaper than a payment for a case where a user passes without reservation, and
the road passage reservation fee is charged even when a user does not pass through a reserved road.

3. The traffic control system according to Claim 2, wherein,
the payment for a case where a user passes without reservation, a different fee is set for each road and each time range according to predicted congestion degree.

4. The traffic control system according to any one of Claims 1 to 3, wherein
the reservation fee setting means sets the road passage reservation fee according to predicted congestion degree by the congestion degree predicting means.

5. The traffic control system according to any one of Claims I to 4, wherein
the reservation collecting means adjusts the number of reservations of the road passage reservation according to predicted congestion degree by the congestion degree predicting means to alleviate congestion of a road.

6. The traffic control system according to any one of Claims 1 to 5, further comprising:
actual congestion degree measurement means that actually measures congestion degree of a corresponding road,
wherein the congestion degree predicting means adjusts predicted congestion degree according to actually measured congestion degree of a road that is actually measured by the actual congestion degree measurement means.

7. A congestion control method for alleviating congestion of a road, the congestion control method including:
a reservation fee setting step that refers to road information accumulated in a road information database, that accumulates the road information including congestion degree, and sets a road passage reservation fee for a user;
a reservation collecting step that collects a road passage reservation from a user for the road passage reservation fee being set; and
a congestion degree predicting step that predicts congestion degree of a road, including a user who passes without making a road passage reservation, by using the road passage reservation collected at the reservation collecting step,
wherein predicted congestion degree predicted at the congestion degree predicting step is used for alleviating congestion of a road.

8. An information processing apparatus in a traffic control system for alleviating congestion of a road, the information processing apparatus comprising:
a road information database that accumulates road information including congestion degree;
reservation fee setting means that refers to the road information accumulated in the road information database and sets a road passage reservation fee for a user;
reservation collecting means that collects a road passage reservation input by a user via a user terminal for the road passage reservation fee being set;
congestion degree predicting means that predicts congestion degree of a road, including a user who passes without making a road passage reservation, by using the road passage reservation collected by the reservation collecting means; and
output means that outputs information of predicted congestion degree predicted by the congestion degree predicting means.

9. A control method of an information processing apparatus in a traffic control system for alleviating congestion of a road, the control method of an information processing apparatus including:
a reservation fee setting step that refers to road information accumulated in a road information database, that accumulates the road information including congestion degree, and sets a road passage reservation fee for a user;
a reservation collecting step that collects a road passage reservation input by a user via a user terminal for the road passage reservation fee being set;
a congestion degree predicting step that predicts congestion degree of a road, including a user who passes without making a road passage reservation, by using the road passage reservation collected at the reservation collecting step; and
an output step that outputs information of predicted congestion degree predicted at the congestion degree predicting step.

10. A computer-readable storage medium storing a control program of an information processing apparatus in a traffic control system for alleviating congestion of a road, the computer-readable storage medium storing the control program causing a computer to function as:
reservation fee setting means that refers to road information accumulated in a road information database, that accumulates the road information including congestion degree, and sets a road passage reservation fee for a user;
reservation collecting means that collects a road passage reservation input by a user via a user terminal for the road passage reservation fee being set;
congestion degree predicting means that predicts congestion degree of a road, including a user who passes without making a road passage reservation, by using the road passage reservation collected by the reservation collecting means; and
output means that outputs information of predicted congestion degree predicted by the congestion degree predicting means.
